(19) Europäisches Patentamt / European Patent Office / Office européen des brevets

(11) **EP 2 182 774 A1**

(12) **EUROPEAN PATENT APPLICATION**
published in accordance with Art. 153(4) EPC

(43) Date of publication:
**05.05.2010 Bulletin 2010/18**

(21) Application number: **08776811.5**

(22) Date of filing: **10.07.2008**

(51) Int Cl.:
*H05B 6/70* (2006.01)   *F24C 7/02* (2006.01)
*H05B 6/68* (2006.01)   *H05B 6/72* (2006.01)
*H05B 6/74* (2006.01)

(86) International application number:
**PCT/JP2008/001852**

(87) International publication number:
**WO 2009/011111 (22.01.2009 Gazette 2009/04)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **13.07.2007  JP 2007183954**
**21.03.2008  JP 2008073276**

(71) Applicant: **Panasonic Corporation**
**Kadoma-shi**
**Osaka 571-8501 (JP)**

(72) Inventors:
• **MIHARA, Makoto**
**Chuo-ku,Osaka 540-6207 (JP)**
• **NOBUE, Tomotaka**
**Chuo-ku, Osaka 540-6207 (JP)**
• **YASUI, Kenji**
**Chuo-ku, Osaka 540-6207 (JP)**
• **OOMORI, Yoshiharu**
**Chuo-ku, Osaka 540-6207 (JP)**

(74) Representative: **Unland, Jochen Hermann**
**Eisenfuhr, Speiser & Partner**
**P.O. Box 10 60 78**
**28060 Bremen (DE)**

(54) **MICROWAVE HEATING DEVICE**

(57)   A microwave heating apparatus includes a microwave generation part (5) having a plurality of output parts, a heating chamber (4) to contain an object to be heated, a plurality of feeding parts (21a, 21b, 21c, 21d) supplying outputs of the plurality of output parts to the heating chamber, and a control part (6) controlling microwave radiation from the plurality of feeding parts to control an electromagnetic wave distribution in the heating chamber, in which a microwave is concentrated on the object to be heated put in the heating chamber.

EP 2 182 774 A1

**Description**

TECHNICAL FIELD

The present invention relates to a microwave heating apparatus for heating an object to be heated, that is a heating target, by irradiating with a microwave.

BACKGROUND ART

A representative apparatus of the microwave heating apparatus heating a target material with a microwave includes a microwave oven. According to the microwave oven, a microwave generated by a microwave generator is radiated into a metal heating chamber, and an object to be heated is heated with the radiated microwave.

Magnetron is used in a microwave generator in a conventional microwave oven. A microwave generated by magnetron is supplied into a heating chamber through a waveguide.

When an electromagnetic field distribution of the microwave in the heating chamber is not uniform, the object to be heated cannot be heated uniformly. Thus, a microwave oven in which the electromagnetic field distribution of the microwave in the heating chamber is uniform is proposed. For example, Japanese Unexamined Patent Publication No. 2004-47322 discloses a microwave oven in which a microwave generated by magnetron is radiated from a bottom part of a heating chamber through a first waveguide and also radiated from an upper surface part of the heating chamber through a second waveguide.

DISCLOSURE OF INVENTION

PROBLEMS TO BE SOLVED BY THE INVENTION

According to the microwave oven disclosed in Japanese Unexamined Patent Publication No. 2004-47322, the waveguide for supplying the microwave generated by magnetron into the heating chamber is formed of a hollow metal tube, and it is arranged outside the heating chamber. Therefore, according to this microwave oven, it is necessary to provide the plurality of waveguides outside the heating chamber in order to guide the microwave from one magnetron to a plurality of microwave radiation apertures of the heating chamber, so that the microwave oven is large in size.

In addition, Japanese Unexamined Patent Publication No. 2004-47322 discloses a constitution of the microwave oven in which a microwave generated in one magnetron is radiated from a plurality of rotatable antennas provided at the bottom of a heating chamber in order to increase a supply position of the microwave. According to the constitution of the microwave oven, it is necessary to make space for the rotation of the plurality of radiation antennas outside the heating chamber, which prevents the microwave oven from being miniaturized.

Furthermore, according to the conventional microwave heating apparatus having the above constitution, the object to be heated is irradiated with the microwave generated from one magnetron, and an electromagnetic field distribution is not adjusted based on the configuration, kind, size and amount of the object to be heated.

Therefore, the field of the microwave heating apparatus requires a microwave heating apparatus in which the electromagnetic field distribution of the microwave in the heating chamber can be uniform or varied based on the object to be heated and miniaturization can be implemented.

In addition, Japanese Unexamined Patent Publication No. 52-19342 discloses a microwave oven in which a heating chamber is in the shape of a polyhedron having six faces or more and radiation antenna are arranged to protrude from a part or whole of each face into the heating chamber in order to uniformly heat an object to be heated.

According to the microwave oven disclosed in Japanese Unexamined Patent Publication No. 52-19342, since the radiation antennas are arranged on the different faces, it is reported that they are prevented from interfering with each other. According to this conventional microwave oven, the radiation antennas are arranged so as to face in the different direction. According to the microwave oven having this constitution, since the radiated electric waves propagate in various directions in the heating chamber and they are reflected by wall surfaces and diffused, it is reported that the electric wave is distributed uniformly.

However, according to the constitution in which the radiation antennas are arranged on each face of the polyhedron, although the radiation directions are different, the microwave is scattered due to reflection by the wall surfaces of the heating chamber and the scattered microwave is further reflected by the wall surfaces to repeat the reflection, so that the scattered state is provided in a wide range in the heating chamber. Therefore, it is impossible to surely prevent the interference of the microwaves radiated from the plurality of radiation antennas in the above constitution.

In addition, Japanese Unexamined Patent Publication No. 53-5445 discloses a heating apparatus in which a plurality of solid type high frequency oscillators are dispersively positioned on the wall surface of a heating chamber and among these microwave output parts, microwave output parts arranged at least two wall surfaces are time-shared.

According to the microwave oven disclosed in Japanese Unexamined Patent Publication No. 53-5445, when the solid type high frequency oscillator selected to be operated is time-shared, it is reported that the microwave output part is prevented from being damaged due to interference and can be operated simultaneously. In addition, it is described in Japanese Unexamined Patent Publication No. 53-5445 that the solid type high frequency oscillators arranged on the intersecting wall surfaces in the heating chamber can oscillate without interfering each other by appropriately selecting coupling configuration between the heating chamber and the microwave output part, so that simultaneous oscillation can be implemented.

However, since there is no description about the coupling configuration to avoid the mutual interference in the constitution of the microwave oven disclosed in Japanese Unexamined Patent Publication No. 53-5445, such constitution cannot be implemented actually.

In addition, a microwave oven including a phase shifter is disclosed in Japanese Unexamined Patent Publication No. 56-132793. The microwave oven has a semiconductor oscillation unit, a distributor dividing an output of the semiconductor oscillation unit into a plurality of outputs, a plurality of amplifiers amplifying the distributed outputs, and a synthesizer synthesizing the outputs of the amplifiers, and the phase shifter is provided between the distributor and the amplifiers.

According to the microwave oven disclosed in Japanese Unexamined Patent Publication No. 56-132793, the phase shifter switches a passage line length of a microwave by on/off characteristics of a diode. In this microwave oven, it is reported that the output is divided into two by using 90-degree and 180-degree hybrid as a synthesizer, and a power ratio of the two outputs is varied by controlling the phase shifter, so that the phases of the two outputs can be the same phase or opposite phases.

According to the conventional microwave oven having the phase shifter, regarding the microwaves radiated from the two outputs of the synthesizer, a radiation power ratio and a phase difference from the two radiation antennas can be optionally and immediately varied when the phase shifter changes the phase. However, it is difficult to surely heat an object to be heated having various configuration, kinds, sizes and amounts to desired heated state in the heating chamber supplied with the microwave by such radiation.

The present invention was made to solve the problem in the conventional microwave heating apparatus, and it is an object of the present invention to provide a microwave heating apparatus in which an electromagnetic field distribution of a microwave in a heating chamber can be uniform or varied appropriately based on an object to be heated, and miniaturization can be implemented, by optimally arranging a plurality of microwave suppliers for radiating the microwave, on different wall surfaces of the heating chamber.

MEANS FOR SOLVING THE PROBLEMS

According to a microwave heating apparatus in a first aspect of the present invention, it includes a microwave generation part having a plurality of output parts, a heating chamber to contain an object to be heated, a plurality of feeding parts supplying outputs of the plurality of output parts to the heating chamber, and a control part controlling microwave radiation from the plurality of feeding parts to control an electromagnetic wave distribution in the heating chamber. According to the microwave heating apparatus constituted as described above in the first aspect of the present invention, since the plurality of supply means serving as microwave suppliers for radiating the microwaves are arranged optimally at the heating chamber, the electromagnetic field distribution of the microwave in the heating chamber can be uniform or appropriately varied based on the object to be heated, and its miniaturization can be implemented.

According to a microwave heating apparatus in a second aspect of the present invention, relating to the first aspect, the control part is constituted to select the feeding part radiating a microwave from among the plurality of feeding parts so as to concentrate the microwave on the object to be heated contained in the heating chamber. According to the microwave heating apparatus constituted as described above in the second aspect of the present invention, the object to be heated contained in the heating chamber can be surely heated with high efficiency in a desired state. As a result, the microwave heating apparatus according to the present invention can uniformly heat the object to be heated.

According to a microwave heating apparatus in a third aspect of the present invention, relating to the first aspect, the control part is constituted to control a phase difference between the feeding parts radiating a microwave so as to concentrate the microwave on the object to be heated contained in the heating chamber. According to the microwave heating apparatus constituted as described above in the third aspect of the present invention, the object to be heated contained in the heating chamber can be surely heated with high efficiency in a desired state.

According to a microwave heating apparatus in a fourth aspect of the present invention, relating to the first aspect, the microwave generation part has one or more oscillation parts generating a microwave. According to the microwave heating apparatus constituted as described above in the fourth aspect of the present invention, the electromagnetic field distribution of the microwave in the heating chamber can be uniform or appropriately varied based on the object to be heated.

According to a microwave heating apparatus in a fifth aspect of the present invention, relating to the first to fourth aspects, the microwave generation part includes an oscillation part generating the microwave, a power distribution part distributing the microwave output of the oscillation part to a plurality of microwave outputs, and a plurality of output parts outputting the microwave outputs of the power distribution part. According to the microwave heating apparatus constituted as described above in the fifth aspect of the present invention, the electromagnetic field distribution of the microwave in the heating chamber can be uniform or appropriately varied based on the object to be heated using magnetron or a semiconductor element in the oscillation part.

According to a microwave heating apparatus in a sixth aspect of the present invention, relating to the first to fourth aspects, the heating chamber is provided with a partition unit dividing the heating chamber into a plurality of spaces, and the microwave is concentrated on an object to be heated contained in each divided heating chamber. According to the microwave heating apparatus constituted as described above in the sixth aspect of the present invention, different kinds of objects of heating can be suitably heated at the same time or individually by the one microwave heating apparatus.

According to a microwave heating apparatus in a seventh aspect of the present invention, relating to the first to fourth aspects, the microwave generation part includes an oscillation part generating the microwave, a power distribution part distributing the microwave output of the oscillation part to a plurality of microwave outputs, amplifiers amplifying the microwave outputs of the power distribution part, and a plurality of output parts outputting the outputs of the amplifiers, and the heating chamber is provided with a partition unit dividing the heating chamber into at least two spaces, and the microwave is concentrated on an object to be heated contained in each divided heating chamber by the plurality of feeding parts. According to the microwave heating apparatus constituted as described above in the seventh aspect of the present invention, different kinds of objects of heating can be suitably heated at the same time or individually by the one microwave heating apparatus.

According to a microwave heating apparatus in an eighth aspect of the present invention, relating to the first to fourth aspects, the heating chamber is provided with a partition unit dividing the heating chamber into at least two right and left or upper and lower spaces, and the microwave is concentrated on an object to be heated contained in each divided heating chamber by the plurality of feeding parts. According to the microwave heating apparatus constituted as described above in the eighth aspect of the present invention, different kinds of objects of heating can be suitably heated at the same time or individually by the one microwave heating apparatus.

According to a microwave heating apparatus in a ninth aspect of the present invention, relating to the first to fourth aspects, the microwave generation part includes an oscillation part generating the microwave, a power distribution part distributing the microwave output of the oscillation part to a plurality of microwave outputs, a plurality of output parts outputting the microwave outputs of the power distribution part, and a power detection part detecting a reflected power from the feeding part, the control part is constituted so as to radiate a microwave from the feeding part to an object to be heated at an output lower than a microwave output at the time of heating operation, varying a frequency generated from the oscillation part, to detect a frequency of a case where the reflected power detected by the power detection part shows a smallest value or a minimum value, and determine a microwave frequency at the time of heating operation based on the detected frequency before the object to be heated is heated, and when the reflected power detected by the power detection part exceeds a predetermined threshold value during the heating operation while the microwave output at the time of heating operation is generated from the oscillation part at the determined microwave frequency, the control part is constituted to reduce the microwave power output from the oscillation part once, sweep the microwave frequency generated from the oscillation part, detects a frequency of a case where a reflected power detected by the power detection part again shows a smallest or minimum value, and resume the heating operation at the frequency of a case where the reflected power shows the smallest or minimum value. According to the microwave heating apparatus constituted as described above in the ninth aspect of the present invention, since the microwave frequency at the time of heating operation is determined based on the frequency of a case where the reflected power is at the smallest or minimum, and the object to be heated is heated at the frequency, the reflected power generated when the object to be heated is heated can be surely reduced. Therefore, the power conversion efficiency of the microwave heating apparatus can be considerably improved. In addition, according to the microwave heating apparatus in the ninth aspect of the present invention, even when the microwave generation part generates heat due to the reflected power, the heating amount can be considerably reduced. As a result, according to the microwave heating apparatus in the ninth aspect of the present invention, the microwave generation part can be prevented from being damaged and malfunctioning due to the reflected power.

According to a microwave heating apparatus in a tenth aspect of the present invention, relating to the ninth aspect, the control part is constituted to minimally increase or decrease the microwave frequency generated from the oscillation part during the heating operation, and slightly increase or decrease the microwave frequency generated from the oscillation part in a direction such that the reflected power detected by the power detection part is decreased. According to the microwave heating apparatus constituted as described above according to the tenth aspect of the present invention, since the microwave frequency at the time of heating operation is determined based on the frequency of a case where the reflected power is at the smallest or minimum, and the object to be heated is heated at the frequency, the reflected power generated when the object to be heated is heated can be surely reduced. Therefore, the power conversion efficiency of the microwave heating apparatus can be considerably improved. In addition, according to the microwave heating apparatus in the tenth aspect of the present invention, even when the reflected power varies during the heating operation, since the frequency in which the reflected power is at the smallest or minimum is followed constantly, the high power conversion efficiency can be constantly maintained.

According to a microwave heating apparatus in an eleventh aspect of the present invention, relating to the ninth aspect, the control part is constituted so as to radiate the microwave from the feeding part to the object to be heated at the output lower than the microwave output at the time of heating operation, varying the frequency of the microwave from the oscillation part to detect a plurality of frequencies of cases where the reflected powers detected by the power detection part show minimum values, before the object to be heated is heated, and the heating operation is performed at the frequency of a case where the detected reflected power shows a first minimum value, and when the reflected power detected by the power detection part exceeds a predetermined value, the oscillation part generates the frequency of a case where the detected reflected power shows a second minimum value detected before the heating operation. According to the microwave heating apparatus constituted as described above according to the eleventh of the present invention, since the microwave frequency at the time of heating operation is determined based on the frequency of a case where the reflected power is at the smallest or minimum, and the object to be heated is heated at the frequency, the reflected power generated when the object to be heated is heated can be surely reduced. Therefore, the power conversion efficiency of the microwave heating apparatus can be considerably improved. In addition, according to the microwave heating apparatus in the eleventh aspect of the present invention, even when the reflected power is increased during the heating operation, since the microwave frequency at the time of heating operation can be varied to the one when the reflected power is small, the high power conversion efficiency can be constantly maintained.

According to a microwave heating apparatus in a twelfth aspect of the present invention, relating to the first to fourth aspects, the microwave generation part includes a plurality of oscillation parts generating the microwave, a power distribution part distributing the microwave output of the oscillation part to a plurality of microwave outputs, and a plurality of output parts outputting the microwave outputs of the power distribution part, the plurality of oscillation parts are paired with the feeding parts radiating the microwaves, and the control part is constituted to control the oscillation parts separately such that a frequency of the microwave radiated from each of the feeding part becomes a frequency of a case where a reflected power from each of the feeding parts shows a smallest value or a minimum value. According to the microwave heating apparatus constituted as described above according to the twelfth aspect of the present invention, since the microwave frequency at the time of heating operation is determined based on the frequency of a case where the reflected power is at the smallest or minimum, and the object to be heated is heated at the frequency, the reflected power generated when the object to be heated is heated can be surely reduced. Therefore, the power conversion efficiency of the microwave heating apparatus can be considerably improved.

According to a microwave heating apparatus in a thirteenth aspect of the present invention, relating to the first to fourth aspects, the microwave generation part includes an oscillation part generating the microwave, a power distribution part distributing the microwave output of the oscillation part to a plurality of microwave outputs, a plurality of output parts outputting the microwave outputs of the power distribution part, and a power detection part detecting a reflected power from the feeding part and an incident power transmitted from the oscillation part to the feeding part, the control part is constituted to radiate a microwave from the feeding part to an object to be heated at an output lower than a microwave output at the time of heating operation, varying a frequency generated from the oscillation part, to detect a frequency of a case where a ratio between a reflected power detected by the power detection part and an incident power shows a smallest value or a minimum value, and determine a microwave frequency at the time of heating operation based on the detected frequency before the object to be heated is heated, and when the determined microwave output at the time of heating operation is generated from the oscillation part, the control part is constituted to minimally increase or decrease the microwave frequency generated from the oscillation part during the heating operation, and slightly increase or decrease the microwave frequency generated from the oscillation part in a direction such that the ratio between reflected power detected by the power detection part and the incident power is decreased. According to the microwave heating apparatus constituted as described above in the thirteenth aspect of the present invention, since the microwave frequency at the time of heating operation is determined based on the frequency of a case where the reflected power is at the smallest or minimum, and the object to be heated is heated at the frequency, the reflected power generated when the object to be heated is heated can be surely reduced. Therefore, the power conversion efficiency of the microwave heating apparatus can be considerably improved. In addition, according to the microwave heating apparatus in the thirteenth aspect of the present invention, even when the microwave generation part generates heat due to the reflected power, the heating amount can be considerably reduced. As a result, according to the microwave heating apparatus in the thirteenth aspect of the present invention, the microwave generation part can be prevented from being damaged and malfunctioning due to the reflected power.

According to a microwave heating apparatus in a fourteenth aspect of the present invention, relating to the first to fourth aspects, the heating chamber is provided with a partition unit having an electric wave shielding function to partition the heating chamber into a plurality of spaces, and the plurality of feeding parts are arranged at each of the plurality of spaces partitioned in the heating chamber, and optionally selected. According to the microwave heating apparatus constituted as described above in the fourteenth aspect of the present invention, different kinds of objects of heating can be suitably heated at the same time or individually by the one microwave heating apparatus.

According to a microwave heating apparatus in a fifteenth aspect of the present invention, relating to the fourteenth aspect, the plurality of feeding parts are provided at each space of the heating chamber, and arranged on a plurality of different wall surfaces constituting each space of the heating chamber. According to the microwave heating apparatus constituted as described above in the fifteenth aspect of the present invention, each of different kinds of objects of heating can be suitably heated by the one microwave heating apparatus.

According to a microwave heating apparatus in a sixteenth aspect of the present invention, relating to the fourteenth aspect, the heating chamber has two spaces, the two feeding parts are arranged at the space so as to be opposed, and phases of the microwaves radiated from the two feeding parts are varied. According to the microwave heating apparatus constituted as described above in the sixteenth aspect of the present invention, each of two kinds of objects of heating can be suitably heated by the one microwave heating apparatus, and the electromagnetic wave distribution of each heating chamber can be varied, so that the object to be heated can be uniformly heated.

According to a microwave heating apparatus in a seventeenth aspect of the present invention, relating to the fourteenth aspect, the heating chamber has two spaces, the two feeding parts are arranged at the space such that the radiated microwaves intersect with each other, and phases of the microwaves radiated from the two feeding parts are varied. According to the microwave heating apparatus constituted as described above in the seventeenth aspect of the present invention, each of two kinds of objects of heating can be suitably heated by the one microwave heating apparatus, and the electromagnetic wave distribution of each heating chamber can be varied, so that the object to be heated can be uniformly heated, or a desired part of the object to be heated can be intensively heated.

According to a microwave heating apparatus in an eighteenth aspect of the present invention, relating to the sixth aspect, the partition unit divides the heating chamber to a plurality of upper and lower spaces and includes a metal plate on which the object to be heated can be set. According to the microwave heating apparatus constituted as described above in the eighteenth aspect of the present invention, since the metal plate can shield the electromagnetic wave as a matter of course, and the partition unit is in the form of a plate, the function of the partition unit is improved to be user-friendly, which becomes convenient as the heating apparatus.

According to a microwave heating apparatus in a nineteenth aspect of the present invention, relating to the sixth aspect, the oscillation part has a plurality of oscillation parts generating the microwaves, and each of the different oscillation parts is provided in each divided heating chamber. According to the microwave heating apparatus constituted as described above in the nineteenth aspect of the present invention, each of different kinds of objects of heating can be suitably heated by the one microwave heating apparatus. In addition, according to the microwave heating apparatus in the nineteenth aspect of the present invention, the microwave can be efficiently transmitted to the object to be heated based on the space in the heating chamber, and the oscillation frequency having high heat receiving efficiency can be selected based on the object to be heated in each of the heating chambers.

According to a microwave heating apparatus in a twentieth aspect of the present invention, relating to the sixth aspect, the oscillation part has a plurality of oscillation parts generating the microwaves, and each of the different oscillation parts is provided in each divided heating chamber, and an oscillation frequency of each oscillation part is varied independently. According to the microwave heating apparatus constituted as described above in the twentieth aspect of the present invention, the microwave frequency at the time of heating operation can be varied and adjusted so that the heat receiving efficiency becomes optimal for a change in kind, material, size, amount and setting position of the object to be heated in the heating chamber. According to the microwave heating apparatus in the twentieth aspect of the present invention, with the function to adjust the microwave frequency at the time of heating operation so that the heat receiving efficiency reaches its maximum, the object to be heated can be more optimally heated and the heating efficiency is considerably high.

According to a microwave heating apparatus in a twenty-first aspect of the present invention, relating to the sixth aspect, a heating time is optionally set for each of the plurality of spaces of the heating chamber. According to the microwave heating apparatus constituted as described above in the twenty-first aspect of the present invention, when the objects of heating are put in heating chambers and heated at the same time, since the objects of heating can be heated for different heating times, the plurality of heating chambers can be independently used in the one microwave heating apparatus by manually setting the heating condition optionally, which is very convenient.

According to a microwave heating apparatus in a twenty-second aspect of the present invention, relating to the sixth aspect, the heating chamber is provided with a temperature detection sensor remotely observing a heated state of the object to be heated contained in each of the plurality of spaces in the heating chamber, and heating is stopped at a predetermined target temperature. According to the microwave heating apparatus constituted as described above in the twenty-second aspect of the present invention, since the heated state of the object to be heated put in each heating chamber can be remotely observed, heating the object to be heated can be optionally stopped by the user, so that the heating apparatus has superior in function.

According to a microwave heating apparatus in a twenty-third aspect of the present invention, relating to the twenty-second aspect, an operation is performed in a sequence such that a heated state of the object to be heated is detected by the temperature detection sensor, and heating is stopped at the predetermined target temperature, and the operation is performed in the different sequence based on the object to be heated individually. According to the microwave heating apparatus constituted as described above in the twenty-third aspect of the present invention, the heated state of the object to be heated put in each heating chamber can be remotely observed. Thus, according to the microwave heating apparatus in the twenty-third aspect of the present invention, while the heated state is observed, a heating treatment can be performed as desired by the user such as uniform heating or intensive heating by adjusting a phase difference and/or adjusting the frequency. According to the microwave heating apparatus in the twenty-third aspect of the present invention, since the object to be heated put in each heating chamber can be heated in a completely independent sequence, superior convenience is provided.

According to a microwave heating apparatus in a twenty-fourth aspect of the present invention, relating to the sixth aspect, the heating chamber is provided with a plurality of doors used when the object to be heated is put in each of the plurality of spaces of the heating chamber. According to the microwave heating apparatus constituted as described above in the twenty-fourth aspect of the present invention, the obj ect to be heated can be easily put in each heating chamber, and superior convenience can be provided.

According to a microwave heating apparatus in a twenty-fifth aspect of the present invention, relating to the twenty-fourth aspect, when any one of the plurality of doors is open, microwave radiation to each space of the heating chamber is stopped. According to the microwave heating apparatus constituted as described above in the twenty-fifth aspect of the present invention, although each heating chamber is sectioned by the partition unit, since there is a possibility that the microwave passes through a small space of the heating chamber wall surface and leaks when one door is opened and the microwave leaks from the heating chamber in operation to the heating chamber having the open door and it is exposed to the user, the oscillation of the microwave is totally stopped when any one of the doors is open to prevent the electromagnetic wave from leaking to secure safety.

According to a microwave heating apparatus in a twenty-sixth aspect of the present invention, relating to the eighteenth aspect, a peripheral part of the metal plate is formed of an insulating material to prevent a spark from being generated between a wall surface of the heating chamber and the metal plate. Since the gap between the wall surface of the heating chamber and the metal part is small, when an electric field concentrates on that part, the spark could be generated. According to the microwave heating apparatus in the twenty-sixth aspect of the present invention, since the part of the metal plate close to the wall surface of the heating chamber is formed of the insulating material, the spark is not likely generated and since the rest part of the metal plate is formed of metal to provide an electromagnetic wave shielding structure, each heating chamber divided by the metal plate can be independent without any microwave interfering to each other.

According to a microwave heating apparatus in a twenty-seventh aspect of the present invention, relating to the first to fourth aspects, a plurality of doors for containing the object to be heated are provided in wall surfaces constituting the heating chamber, and the feeding parts are provided on opposed wall surfaces having no door. According to the microwave heating apparatus constituted as described above in the twenty-seventh aspect of the present invention, the object to be heated can be efficiently heated by the microwaves supplied from the opposed wall surfaces, and since the plurality of doors are provided, the object to be heated can be put in and taken out from the heating chamber in different directions, which is very convenient.

According to a microwave heating apparatus in a twenty-eighth aspect of the present invention, relating to the first to fourth aspects, a plurality of doors for containing the object to be heated are provided in wall surfaces constituting the heating chamber so as to be opposed, and the feeding parts are provided on opposed wall surfaces having no door. According to the microwave heating apparatus constituted as described above in the twenty-eighth aspect of the present invention, when it is used in the face-to-face kitchen, the user can access the heating apparatus from both kitchen side and living side. In addition, according to the microwave heating apparatus in the twenty-eighth aspect of the present invention, when it is used at a convenience store, a staff at the store and a customer can access the heating apparatus from different directions.

According to a microwave heating apparatus in a twenty-ninth aspect of the present invention, relating to the first to fourth aspects, a plurality of doors for containing the object to be heated are provided in wall surfaces constituting the heating chamber, the feeding parts are provided on opposed wall surfaces having no door, and the feeding parts receive the microwaves from a common oscillation part. According to the microwave heating apparatus constituted as described above in the twenty-ninth aspect of the present invention, the phases of the microwaves supplied from the opposed feeding parts can be uniquely controlled.

EFECT OF THE INVENTION

According to microwave heating apparatus in the present invention, its convenience is enhanced with the plurality of doors, and the convenience is further enhanced by arranging the plurality of microwave supply means for radiating the microwave, on the wall surfaces of the heating chamber to optimize the microwaves radiated from the microwave supply means, so that the object having various configurations, kinds, sizes and amounts can be heated into desired states.

BRIEF DESCRIPTION OF DRAWINGS

Fig. 1 is a front view showing a microwave heating apparatus according to a first embodiment of the present invention;
Fig. 2 is a block diagram showing a constitution of a microwave supply system of the microwave heating apparatus according to the first embodiment;
Fig. 3 is plan sectional view showing a heating chamber used in an experiment to describe the present invention, taken from above;
Fig. 4 is an isothermal chart in the heating chamber when a phase difference of radiated microwaves is 0 degrees, as an experiment result with the heating chamber shown in Fig. 3;
Fig. 5 is an isothermal chart in the heating chamber when a phase difference of radiated microwaves is 40 degrees, as an experiment result with the heating chamber shown in Fig. 3;
Fig. 6 is an isothermal chart in the heating chamber when a phase difference of radiated microwaves is 80 degrees, as an experiment result with the heating chamber shown in Fig. 3;
Fig. 7 is an isothermal chart in the heating chamber when a phase difference of radiated microwaves is 120 degrees, as an experiment result with the heating chamber shown in Fig. 3;
Fig. 8 is an isothermal chart in the heating chamber when a phase difference of radiated microwaves is 160 degrees, as an experiment result with the heating chamber shown in Fig. 3;
Fig. 9 is an isothermal chart in the heating chamber when a phase difference of radiated microwaves is 200 degrees, as an experiment result with the heating chamber shown in Fig. 3;
Fig. 10 is an isothermal chart in the heating chamber when a phase difference of radiated microwaves is 240 degrees, as an experiment result with the heating chamber shown in Fig. 3;
Fig. 11 is an isothermal chart in the heating chamber when a phase difference of radiated microwaves is 280 degrees, as an experiment result with the heating chamber shown in Fig. 3;
Fig. 12 is an isothermal chart in the heating chamber when a phase difference of radiated microwaves is 320 degrees, as an experiment result with the heating chamber shown in Fig. 3;
Fig. 13 is a block diagram showing a constitution of a microwave supply system of a microwave heating apparatus according to a second embodiment of the present invention;
Fig. 14 is a front view showing a microwave heating apparatus according to a third embodiment of the present invention;
Fig. 15 is a front view showing a heating chamber in the microwave heating apparatus according to the third embodiment;
Fig. 16 is a plan view showing a partition plate in the microwave heating apparatus according to the third embodiment;
Fig. 17 is sectional views showing the heating chamber in the microwave heating apparatus according to the third embodiment;
Fig. 18 is a front view showing another constitution of the microwave heating apparatus according to the third embodiment;
Fig. 19 is a block diagram showing a constitution of a microwave supply system of a microwave heating apparatus according to a fourth embodiment of the present invention;
Fig. 20 is a block diagram showing a constitution of a control system of the microwave heating apparatus according to the fourth embodiment;
Fig. 21 is a sectional view showing a constitution of a microwave heating apparatus according to a fifth embodiment of the present invention;
Fig. 22 is a block diagram showing a constitution of a microwave supply system of the microwave heating apparatus according to the fifth embodiment;
Fig. 23 is a block diagram showing a constitution of a microwave supply system of a microwave heating apparatus according to a sixth embodiment of the present invention;
Fig. 24 is a plan view showing a microwave heating apparatus according to a seventh embodiment of the present invention;
Fig. 25 is a block diagram showing a constitution of a microwave supply system of a microwave heating apparatus according to an eighth embodiment of the present invention;
Fig. 26 is a graph showing a relation between a reflected power detected by four power detection parts and an oscillation frequency in the microwave heating apparatus according to the eighth embodiment;
Fig. 27 is a view to describe a frequency extracting process in the microwave heating apparatus according to the eighth embodiment;
Fig. 28 is a view to describe another frequency extracting process in the microwave heating apparatus according to the eighth embodiment;
Fig. 29 is schematic views showing various kinds of constitutions contained in a microwave generation part in the microwave heating apparatus according to the present invention; and

Fig. 30 is a view showing a specific circuit constitution of a power synthesis part in the microwave heating apparatus according to the present invention.

BEST MODE FOR CARRYING OUT THE INVENTION

Preferred embodiments of a microwave heating apparatus according to the present invention will be described with reference to accompanying drawings hereinafter. In addition, although a microwave oven will be described as the microwave heating apparatus in the following embodiment, the microwave oven is only illustrative and the microwave heating apparatus according to the present invention is not limited to the microwave oven and includes a microwave heating apparatus such as a heating apparatus using dielectric heat, a disposer and a semiconductor production equipment. In addition, the present invention is not limited to the following specific embodiments, and a constitution based on the same technical concept is contained in the present invention.

(First Embodiment)

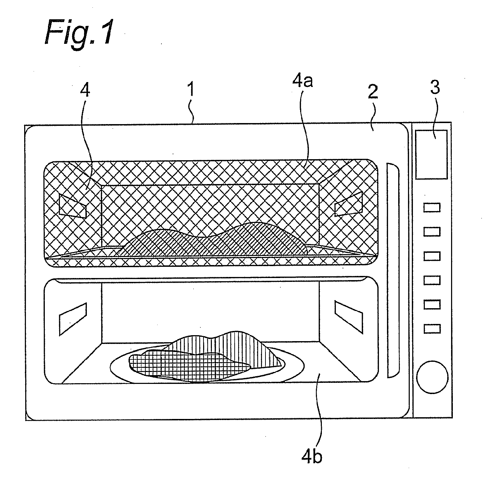

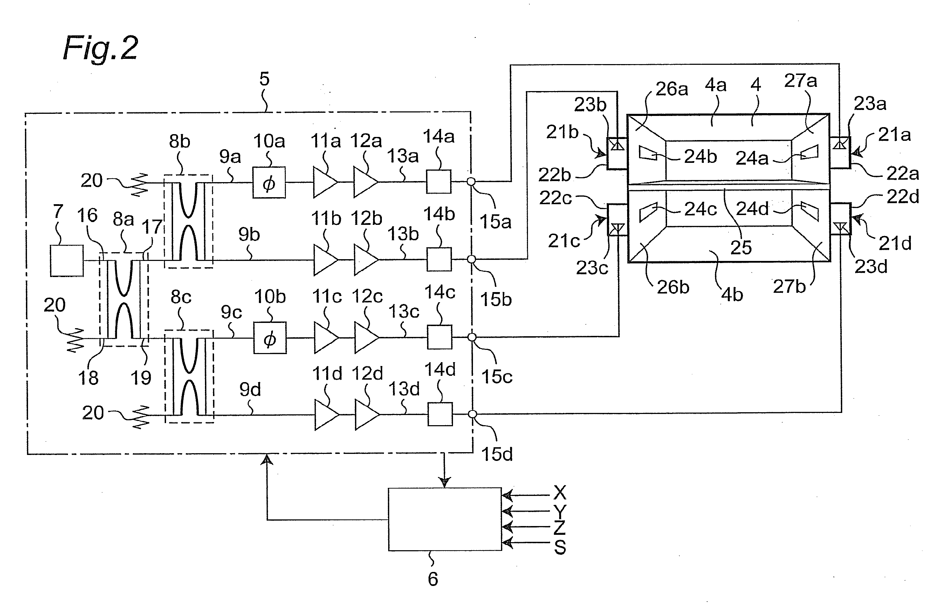

Fig. 1 is a front view showing an outline of a microwave heating apparatus according to a first embodiment of the present invention. Fig. 2 is a block diagram showing a constitution of a microwave supply system in the microwave heating apparatus according to the first embodiment.

As shown in Fig. 1, a microwave oven 1 serving as the microwave heating apparatus according to the first embodiment is provided with a door 2 having upper and lower windows at the front, and a heating chamber 4 for an object to be heated is divided into two parts such as an upper heating chamber 4a and a lower heating chamber 4b. According to the microwave heating apparatus in the first embodiment, a user sets heating conditions of the upper heating chamber 4a and/or the lower heating chamber 4b on an operation display panel 3 provided at the front, and the heating condition and a processed state of the object to be heated can be displayed thereon.

According to the constitution of the microwave supply system shown in Fig. 2, the microwave heating apparatus according to the first embodiment includes a microwave generation part 5 for forming a microwave supplied to the heating chamber 4, and a control part 6 including a microcomputer for controlling the microwave generation part 5 based on the heating condition set on the operation display panel 3.

The microwave generation part 5 comprises an oscillation part 7 constituted by using a semiconductor element, three two-stage power distribution parts 8a, 8b and 8c to divide an output of the oscillation part 7 to four outputs, first-stage amplifiers 11a, 11b, 11c and 11d constituted by using a semiconductor elements to which the four outputs distributed from the second-stage power distribution parts 8b and 8c are input through microwave transmission paths 9a, 9b, 9c and 9d, respectively, main amplifiers 12a, 12b, 12c and 12d constituted by using semiconductor elements to which the outputs of the first-stage amplifiers 11a, 11b, 11c and 11d are input to be more amplified, respectively, output parts 15a, 15b, 15c and 15d to which the outputs of the main amplifiers 12a, 12b, 12c and 12d are input through the microwave transmission paths 13a, 13b, 13c and 13d, respectively, power detection parts 14a, 14b, 14c and 14d connected to the microwave transmission paths 13a, 13b, 13c and 13d, respectively and detecting reflected powers from the heating chamber 4, and phase variable parts 10a and 10b connected to the microwave transmission paths 9a and 9c. Although two-stage amplification blocks consisting of the first-stage amplifiers 11a, 11b, 11c and 11d and the main amplifiers 12a, 12b, 12c and 12d is shown in Fig. 2, the number of stages ranges from one to several stages depending on an output specification of the microwave heating apparatus.

The heating chamber 4 of the microwave heating apparatus according to the first embodiment is divided into two upper and lower portions by a partition board 25, such as the upper heating chamber 4a and the lower heating chamber 4b each having a roughly rectangular solid structure and containing the object to be heated. In addition, the microwave heating apparatus is provided with the door 2 through which the object to be heated is put in and taken out of the upper heating chamber 4a and the lower heating chamber 4b, and it is constituted such that the microwave supplied into the heating chamber may not leak from the heating chamber.

As described above, the four microwave outputs are transmitted from the microwave generation part 5 to the heating chamber 4, and the microwaves output from the microwave generation part 5 are transmitted to four feeding parts 21a, 21b, 21c and 21d to be radiated into the heating chamber. The feeding parts 21a, 21b, 21c and 21d are provided on wall surfaces constituting the heating chamber 4. More specifically, the feeding part 21b and feeding part 21a are arranged so as to be opposed to each other, at opposed upper left wall surface 26a and upper right wall surface 27a of the upper heating chamber 4a.

Meanwhile, the feeding part 21c and feeding part 21d are arranged so as to be opposed to each other, at opposed lower left wall surface 26b and lower right wall surface 27b of the lower heating chamber 4b.

As described above, the partition board 25 having a function of cutting off an electromagnetic wave is provided between the upper heating chamber 4a provided with the one pair of the feeding part 21a and the feeding part 21b and the lower heating chamber 4b provided with the other pair of the feeding part 21c and the feeding part 21d. The partition board 25 may be formed of a metal plate and may be a ceramic material as long as the material does not transmit the electromagnetic wave and has a high reflectivity coefficient.

Since the microwave heating apparatus according to the first embodiment is constituted as described above, the inside of the heating chamber 4 is divided into two parts and the two heating chambers (4a and 4b) are formed in one chassis. According to the usage by the user, the microwave heating apparatus in the first embodiment can be used such that a main dish to be heated is put in the upper heating chamber 4a and a side dish to be heated is put in the lower heating chamber 4b and they can be heated at the same time.

According to the microwave heating apparatus in the first embodiment, the feeding parts 21a and the feeding part 21b of the upper heating chamber 4a are opposed to each other and the feeding part 21c and the feeding part 21d of the lower heating chamber 4b are opposed to each other, and they radiate the microwaves so as to be opposed to each other in the upper heating chamber 4a and the lower heating chamber 4b. In addition, since the phase variable parts 10a and 10b are provided in the microwave transmission paths 9a and 9c, the phase of the microwave radiated so as to be opposed can be varied.

According to the above constitution, since the microwaves radiated from the opposed feeding parts 21a and 21b and the opposed feeding parts 21c and 21d in the upper heating chamber 4a and the lower heating chamber 4b, respectively impinge on each other, and the phases of the microwaves can be varied, a desired electromagnetic wave distribution can be formed in the heating chamber 4.

The feeding parts 21a, 21b, 21c and 21d have openings 24a, 24b, 24c and 24d formed in wall surfaces of the heating chamber 4, waveguide parts 22a, 22b, 22c and 22d guiding the microwaves to the openings 24a, 24b, 24c and 24d, and supply parts 23a, 23b, 23c and 23d serving as antennas for outputting the microwaves from the microwave generation part 5, respectively. Each of the openings 24a, 24b, 24c and 24d is formed so as to have a rectangular configuration and arranged such that its longitudinal direction is a horizontal direction. It is noted that the horizontal direction indicates a depth direction connecting the front side and the back side of the microwave heating apparatus.

According to the microwave heating apparatus in the first embodiment, the phase variable parts 10a and 10b can optionally vary a phase difference between the opposed microwaves by a control signal from the control part 6. Thus, the two phase variable parts 10a and 10b adjust the phases of the opposed microwaves in the upper heating chamber 4a and the lower heating chamber 4b, to form the desired electromagnetic distribution in the upper heating chamber 4a and the lower heating chamber 4b, respectively. Each of the phase variable parts 10a and 10b in the first embodiment is formed of a capacitance variable element in which capacitance is varied according to an applied voltage, and its phase variable range is 0 to 180 degrees.

The control part 6 sends an oscillation frequency adjustment signal to the oscillation part 7 of the microwave generation part 5, based on the heating condition of the object to be heated that is directly input to the operation display panel 3 (refer to Fig. 1) by the user (designated by an arrow X in Fig. 2) and heating information showing a heated state of the object to be heated detected during the heating operation, to vary an oscillation frequency of the microwave generated from the oscillation part 7. In addition, the control part 6 controls a drive power supplied to the oscillation part 7 and the amplification block constituting the microwave generation part 5, and a voltage applied to the phase variable parts 10a and 10b based on detection information (shown by an arrow Z in Fig. 2) from the power detection parts 14a and 14b, 14c and 14d for detecting the reflected power. In Fig. 2, a signal designated by an arrow S input to the control part 6 is a heating start signal, and it is input to the control part when the user performs a heating start operation on the operation display panel 3.

Thus, the control part 6 drives and controls the microwave generation part 5 so as to optimally heat the object contained in each of the upper heating chamber 4a and the lower heating chamber 4b in the heating chamber 4 based on the input signal. Detailed driving control of the control part 6 will be described below.

Description will be made of the fact that the inside of the heating chamber 4 becomes the optimal heating condition when the phase variable parts 10a and 10b are controlled by the control signal from the control part 6.

In addition, description will be made of how a microwave signal having an about quarter of electric energy is distributed from the oscillation part 7 to each of the feeding parts 21a, 21b, 21c and 21d.

Transmission circuits having characteristic impedance of roughly 50 Ω are formed in the microwave transmission paths 9a, 9b, 9c, 9d, 13a, 13b, 13c and 13d in the microwave generation part 5 by conductor patterns provided on one surface of dielectric substrates. Each of the two-stage power distribution parts 8a, 8b and 8c has the same structure such as a 3 dB branch-line coupler configuration. Therefore, the constitution of the first-stage power distribution part 8a will be described as a representative example in the following description.

The power distribution part 8a has four terminals such as a first terminal 16, a second terminal 17, a third terminal 18 and a fourth terminal 19. Microstrip lines each having a characteristic impedance of 50 Ω and an electric length of $\lambda/4$ ($\lambda$ is an effective wavelength of a center frequency of a used frequency band) are arranged between the first terminal 16 and the second terminal 17, and between the third terminal 18 and the fourth terminal 19, respectively. In addition, microstrip lines each having a characteristic impedance of 35.35 Ω and an electric length of $\lambda/4$ are arranged between the first terminal 16 and the third terminal 18, and between the second terminal 17 and the fourth terminal 19, respectively. Furthermore, the third terminal 18 is connected to an electric termination having a resistance value of 50 Ω.

According to the power distribution part 8a having the above constitution, the microwave signal input to the first terminal 16 is distributed to the second terminal 17 and the fourth terminal 19 to be output. In addition, at this time, according to the microwave signals output from the second terminal 17 and the fourth terminal 19, the phase of the microwave signal output from the fourth terminal 19 is delayed by 90 degrees based on the phase of the microwave signal output from the second terminal 17.

According to the two-stage constitution in which the outputs of the power distribution part 8a are input to the two next-stage power distribution parts 8b and 8c, a roughly 1/4 of the output power of the oscillation part 7 is output to each of the first-stage amplifiers 11a, 11b, 11c and 11d in the following amplification block. In the four microwave transmission paths 9a, 9b, 9c and 9d, the phases of the microwave signals transmitting in the microwave transmission paths 9a and 9c are delayed by 90 degrees and the phase of the microwave signal transmitting in the microwave transmission path 9d is delayed by 180 degrees based on the phase of the microwave signal transmitting in the microwave transmission path 9b. In addition, although the variation in the four-distributed powers contains allowance differences in gain of the phase variable parts 10a and 10b, the first-stage amplifiers 11a, 11b, 11c and 11d and the main amplifiers 12a, 12b, 12c and 12d, it is not dominant.

Description will be made of an experiment made by the inventors of the present invention to know how an electromagnetic field distribution in the heating chamber is varied by varying the phase difference between the microwaves radiated from the antennas of the opposed feeding parts.

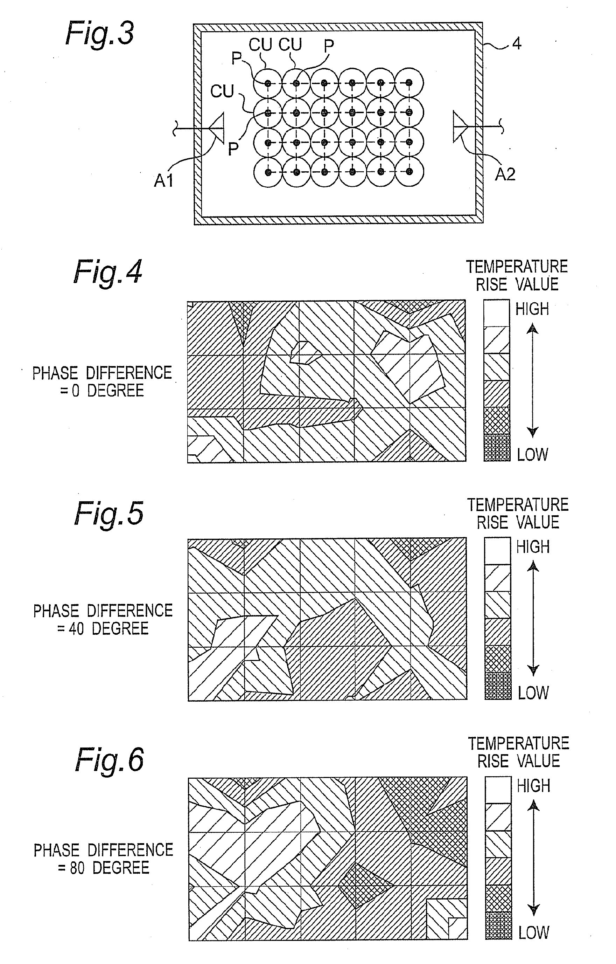

Fig. 3 is a plan sectional view showing the heating chamber 4 used in the experiment and taken from the above. As shown in Fig. 3, in this experiment, a plurality of cups (displayed as CU in Fig. 3) each containing a predetermined amount of water were aligned in the heating chamber 4 first. Temperatures of the water at the center (displayed as a point P in Fig. 3) of each cup (CU) were measured.

Thus, the microwaves having different phases were radiated from two antennas A1 and A2 arranged in the wall surface of the heating chamber 4. Then, the radiation of the microwaves was stopped after a lapse of a predetermined time and a raised temperature value due to the microwave radiation was measured at the center (P) of each cup (CU).

A plurality of phase differences were set between the microwave radiated from the antenna A1 and the microwave radiated from the antenna A2, and the microwaves were radiated several times with respect to each set phase difference. In addition, according to this experiment, the phase difference was varied by 40 degrees within a range of 0 to 320 degrees and measured.

As described above, by measuring the raised temperature value of the water arranged in a horizontal plane of the inside of the heating chamber of the microwave heating apparatus, the electromagnetic field distribution of the microwaves in the heating chamber was investigated. According to this experiment, it is determined that the electromagnetic field distribution is thick in a region having a high raised temperature value of the water and the electromagnetic field distribution is thin in a region having a low raised temperature value of the water.

Fig. 4 is an isothermal chart showing an experiment result based on the raised temperature value of the water when the phase difference between the microwave from the antenna A1 and the microwave from the antenna A2 is set to 0 degrees. Similarly, Figs. 5 to 12 are isothermal charts showing experiment results when the phase differences between the microwave from the antenna A1 and the microwave from the antenna A2 varies by 40 degrees each within the range of 40 to 320 degrees and measured. In addition, each of phase differences shown in Figs. 5 to 12 shows a delayed phase of the microwave radiated from the antenna A1 based on the phase of the microwave radiated from the antenna A2.

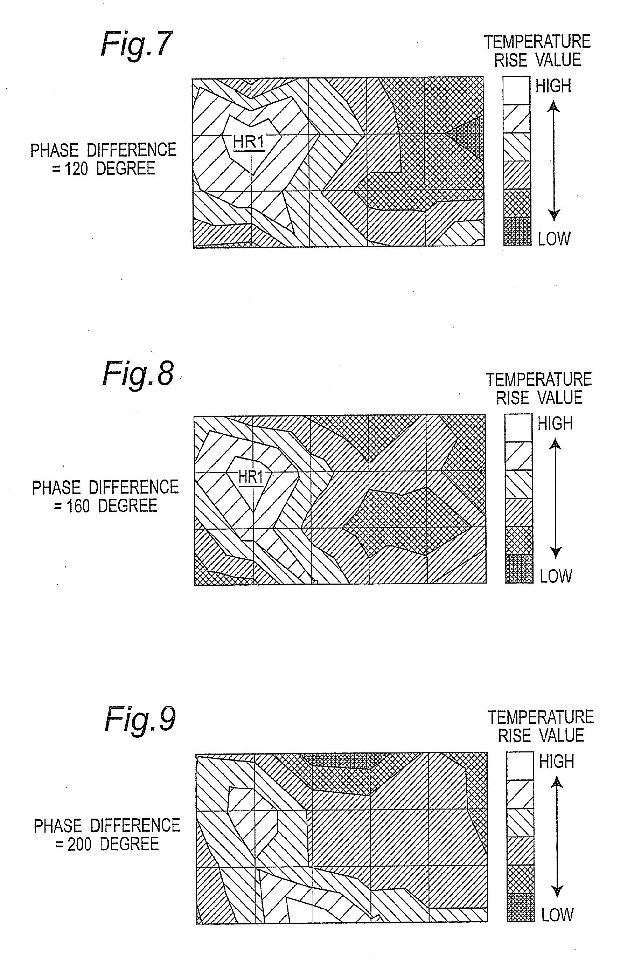

According to the experiment results shown in Figs. 4 to 12, the raised temperature value of the water largely varies in the heating chamber. In addition, as shown in Figs. 7 and 8, when the set phase differences are 120 degrees and 160 degrees, the raised temperature value is very high in a region (displayed as HR1 in Figs. 7 and 8) close to one side surface (left wall surface) of the heating chamber 4.

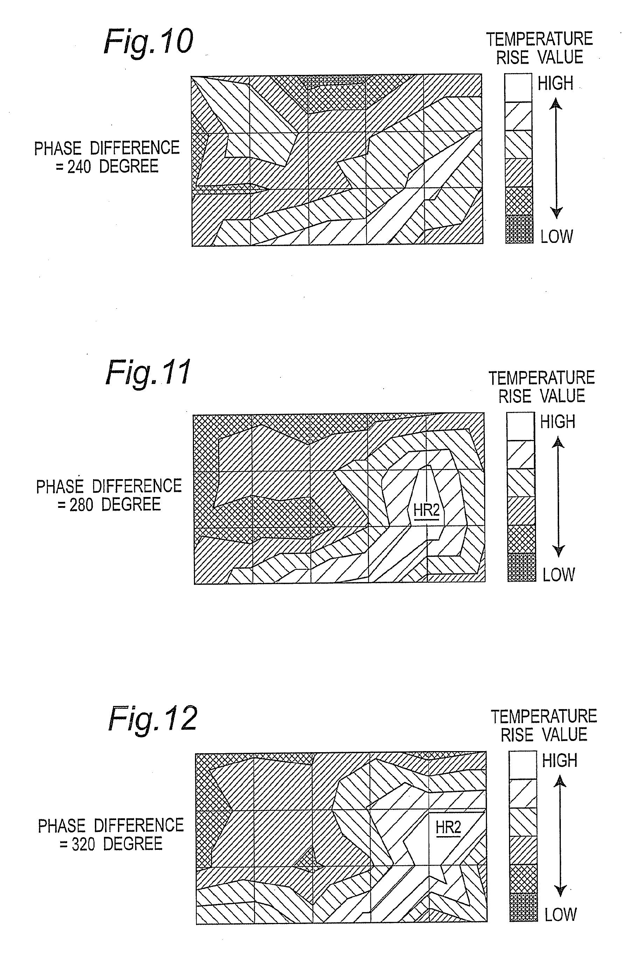

Meanwhile, as shown in Figs. 11 and 12, when the set phase differences are 280 degrees and 320 degrees, the raised temperature value is very high in a region (displayed as HR2 in Figs. 11 and 12) close to the other side surface (right wall surface) of the heating chamber 4.

Based on the above experiment results, the inventors focus on the fact that the electromagnetic field distribution in the heating chamber varies based on the phase difference of the microwaves radiated from the two opposed antennas A1 and A2. The inventors have found that the object in the heating chamber can be uniformly heated or a specific part of the object can be intensively heated by varying the phase difference of the microwaves radiated from the opposed antennas A1 and A2.

Therefore, the electromagnetic wave distribution in the heating chamber can be varied by varying the phase difference between the microwaves radiated from the opposed antennas A1 and A2. Therefore, it is not necessary to move the object to be heated set in the heating chamber for uniform cooking. In addition, the electromagnetic wave distribution in the heating chamber can be varied by varying the phase difference as described above. Therefore, it is not necessary to move the antenna radiating the microwave to change the electromagnetic field distribution for uniform cooking.

In addition, as can be clear from the above experiment result, since a phenomenon caused by the collision of the oppositely radiated microwaves is generated as the change in electromagnetic field distribution, the same phenomenon is generated when the antennas A1 and A2 are arranged such that the microwaves radiated from the antenna A1 and the antenna A2 intersect with each other. This can be implemented in a constitution in which the antennas A1 and A2 are provided on adjacent wall surfaces of the heating chamber.

Therefore, according to the microwave heating apparatus in the first embodiment of the present invention to implement a desired electromagnetic field distribution, it is not necessary to provide a mechanism for moving the object to be heated or the antenna and it is not necessary to make space for moving the object to be heated or the antenna in the heating chamber. As a result, the constitution of the microwave heating apparatus in the first embodiment can be small and low in cost.

In addition, although the heating chamber is divided into the upper heating chamber and the lower heating chamber in the microwave heating apparatus according to the first embodiment, the heating chamber may have a constitution in which the arrangement of the feeding part is changed and a partition unit for dividing the heating chamber into a right heating chamber and a left heating chamber is provided, and the microwaves is concentrated on an obj ect to be heated put in each of the divided heating chambers.

As described above, according to the microwave heating apparatus in the first embodiment of the present invention, convenience is improved due to the plurality of heating chambers 4a and 4b, and the objects of heating having different configurations, kinds, and volumes can be heated into a desired state by arranging the feeding parts 21a, 21b, 21c and 21d serving as the plurality of microwave suppliers for radiating the microwaves on the different wall surfaces of the heating chamber, to optimize the microwaves radiated from the microwave suppliers.

(Second Embodiment)

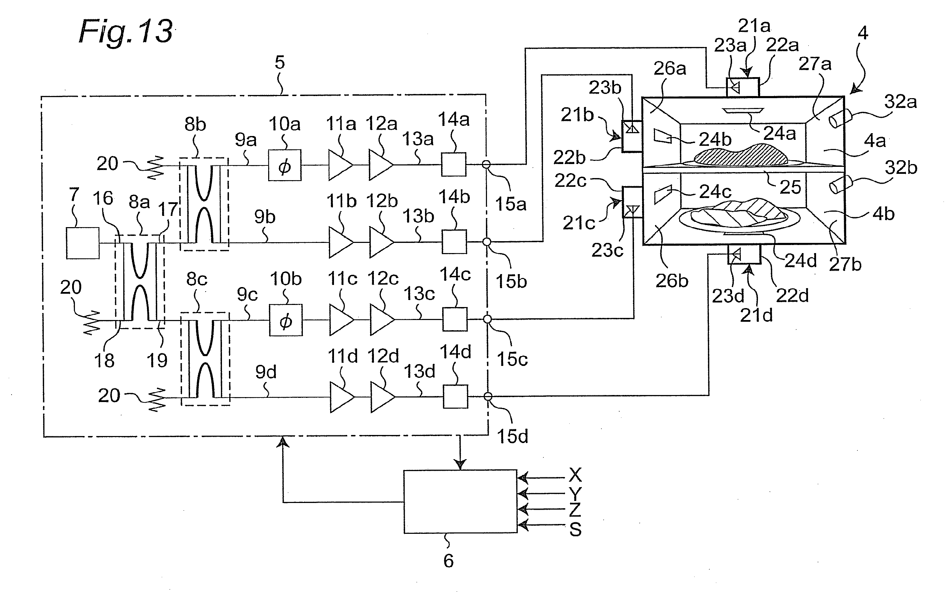

A microwave heating apparatus according to a second embodiment of the present invention will be described with reference to accompanying Fig. 13. Fig. 13 is a block diagram showing a constitution of a microwave supply system of the microwave heating apparatus according to the second embodiment.

The microwave heating apparatus according to the second embodiment differs from the microwave heating apparatus according to the first embodiment by arrangement of feeding parts in a heating chamber. The same reference symbol is assigned to the one having the same function and the constitution as that of the first embodiment, and the description in the first embodiment is applied to it. Description will be made of a different point between the microwave heating apparatus in the first embodiment and the microwave heating apparatus in the second embodiment hereinafter.

As shown in Fig. 13, a feeding part 21a and a feeding part 21b are arranged at crossed positions in an upper heating chamber 4a. That is, in the upper heating chamber 4a, the feeding part 21a is provided on a ceiling, that is, on an upper surface, and the feeding part 21b is provided on a left wall surface 26a. Meanwhile, in a lower heating chamber 4b, a feeding part 21c is provided on a left wall surface 26b and a feeding part 21d is provided on a bottom surface.

According to the microwave heating apparatus in the second embodiment having the above constitution, similar to the microwave heating apparatus in the first embodiment, an electromagnetic filed distribution can be varied in each of the heating chambers 4a and 4b by setting a phase difference in the microwaves radiated from the two feeding parts provided in each of the upper heating chamber 4a and the lower heating chamber 4b.

An advantageous point in the microwave heating apparatus in the second embodiment is that since there is no feeding part on right wall surfaces 27a and 27b, the space of the right wall surfaces 27a and 27b can be used. For example, an infrared ray sensor 32a serving as a temperature detection sensor for obliquely observing a temperature rising state of the object to be heated can be provided at a slightly upper side of the right wall surface 27a of the upper heating chamber 4a. In addition, an infrared ray sensor 32b serving as a temperature detection sensor for obliquely observing a temperature rising state of the object to be heated can be provided at a slightly lower side of the right wall surface 27b of the lower heating chamber 4b. Thus, when the infrared ray sensors 32a and 32b are provided, the temperature rising states of the objects in both of the heating chambers can be observed independently.

When detection signals of the infrared ray sensors 32a and 32b showing the actual temperatures of the objects are returned to a control part 6 as heating information (shown as an arrow Y in Fig. 13), they are compared with a signal showing a desired finishing temperature determined by a heating condition (shown by an arrow X in Fig. 13) set by a user. When the actual temperature of the object to be heated reaches the desired finishing temperature, microwave generation from a microwave generation part 5 is stopped and heating of the object is stopped.

As described above, according to the microwave heating apparatus in the second embodiment of the present invention, similar to the microwave heating apparatus in the first embodiment, convenience is improved due to the plurality of heating chambers 4a and 4b, and the objects of heating having different configurations, kinds, and volumes can be heated into a desired state by optimally arranging the feeding parts 21a, 21b, 21c and 21d serving as the plurality of microwave suppliers for radiating the microwaves, on the wall surfaces of the heating to optimize the microwaves radiated from the microwave suppliers. Furthermore, according to the microwave heating apparatus in the second embodiment, the objects can be heated with high accuracy into the desired states based on the objects housed in the plurality of heating chambers.

(Third Embodiment)

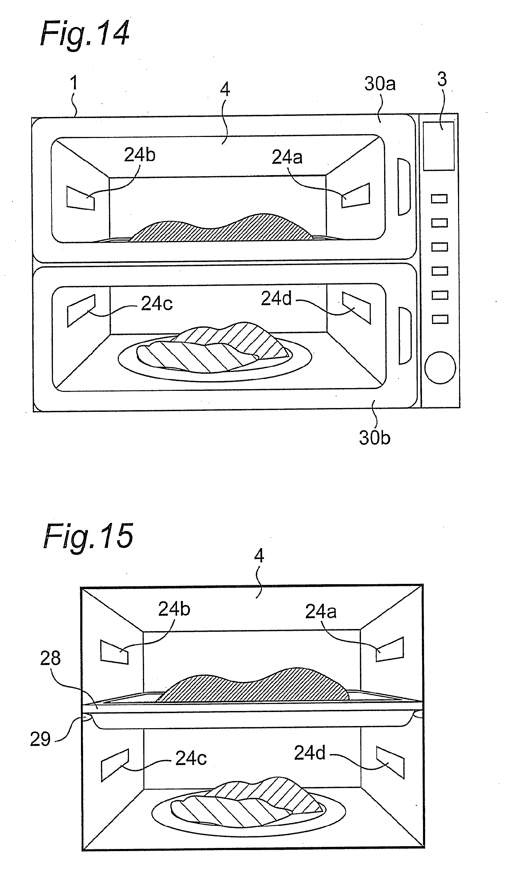

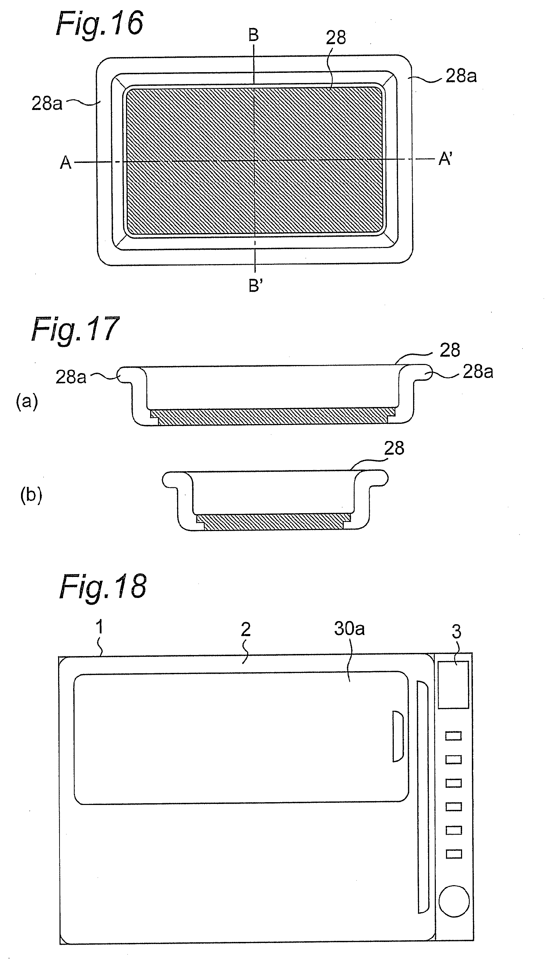

A microwave heating apparatus according to a third embodiment of the present invention will be described with reference to accompanying Figs. 14 to 17. Fig. 14 is a front view showing an appearance of the microwave heating apparatus in the third embodiment. Fig. 15 is a view showing only a heating chamber in the microwave heating apparatus according to the third embodiment, taken from the front. Figs. 16 and 17 are views showing a partition plate serving as a partition unit used in the microwave heating apparatus according to the third embodiment.

As shown in Figs. 14 and 15, according to the microwave heating apparatus in the third embodiment, similar to the microwave heating apparatus in the first embodiment, a heating chamber 4 is divided into an upper heating chamber 4a and a lower heating chamber 4b. The microwave heating apparatus in the third embodiment includes an upper door 30a and a lower door 30b on its front, through which objects of heating is put in and taken out of the upper heating chamber 4a and the lower heating chamber 4b.

The microwave heating apparatus in the third embodiment is provided with shelf rails 29 at the centers of the right and left wall surfaces of the heating chamber 4. A partition plate 28 is slidably set on the shelf rails 29. The partition plate 28 can move along the shelf rails 29 and can be inserted into the heating chamber. The partition plate 28 inserted into the heating chamber 4 serves as a partition board for dividing the heating chamber 4 into the upper heating chamber and the lower heating chamber.

Fig. 16 is a plan view showing the partition plate 28 used in the microwave heating apparatus in the third embodiment. A portion (a) of Fig. 17 is a sectional view taken along a line A-A' of the partition plate 28 shown in Fig. 16, and a portion (b) of Fig. 17 is a sectional view taken along a line B-B' of the partition plate 28 shown in Fig. 16. Metal parts are shown by hatching in Figs. 16 and 17.

As shown in Fig. 16, the partition plate 28 has a rectangular configuration so as to correspond to the plane sectional configuration of the heating chamber 4, and flange 28a is provided across its four sides. Two opposite sides of the flange 28a slide on the shelf rail 29. The partition plate has a depth such that its center part is recessed. Therefore, even when the object to be heated on the partition plate is heated and cooking liquid and water come out of the object, the liquid can be surely received by the partition plate 28. That is, since the partition plate 28 has roughly vertical wall surfaces around its outer periphery, the liquid from the object to be heated is prevented from being spilt in the heating chamber 4, and from dropping from the upper heating chamber 4a to the lower heating chamber 4b divided by the partition plate 28.

A most part of a bottom part of the partition plate 28 is formed of metal such as iron, aluminum and stainless to shield an electromagnetic wave. Since the upper heating chamber 4a and the lower heating chamber 4b are separated by the partition plate 28, the microwave is prevented from leaking between the upper heating chamber 4a and the lower heating chamber 4b to affect respective electromagnetic field distributions. Therefore, according to the microwave heating apparatus in the third embodiment, the two heating chambers 4a and 4b are separated by the partition plate 28.

As shown in Figs. 16 and 17, the partition plate 28 has two-piece structure consisting of a resin part and a metal part so as not to generate a spark due to concentration of an electric field between the wall surface of the heating chamber 4 and the partition plate 28 formed of meal.

More specifically, according to the partition plate 28, the vicinity of an outer edge part adjacent to the wall surface of the heating chamber 4 formed of metal is formed of a resin, and the rest of the part is formed of metal. When a resin size and a resin position are appropriately selected in the partition plate 28, the microwave can be substantially prevented from leaking between the upper and lower heating chambers even when the resin exists. For example, when 80% or more of a projected plane region of the partition plate 28 is formed of metal, the electromagnetic field distributions in the upper and lower heating chambers divided by the partition plate 28 are not greatly affected. Especially, it is preferable that 90% or more of the surface in the partition plate 28 for setting the object to be heated is formed of metal.

In addition, the partition plate may be totally formed of metal and the shelf rail on which the partition plate is put may be formed of a resin so as to cover the peripheral part containing the flange of the partition plate.

Although the heating chamber 4 is divided into the two upper and lower parts by the partition plate 28 in the microwave heating apparatus according to the third embodiment, as the two heating chambers 4 (4a and 4b) are provided, each output becomes roughly half of a maximum output due to limited radiation power, and the heating chamber 4 (4a and 4b) becomes small. Thus, when the partition plate 28 is removed from the heating chamber 4 for the user who hates the above limitation, the object is heated in the one heating chamber 4 at the maximum output of the microwave heating apparatus like a general microwave oven.

The microwave heating apparatus in the third embodiment is provided with the upper door 30a and the lower door 30b through which the object to be heated is put in and taken out. Therefore, when the object to be heated put in the upper heating chamber 4a sectioned by the partition plate 28 is finished earlier than the object to be heated put in the lower heating chamber 4b, the corresponding object to be heated can be taken out by opening the upper door 30a only. Thus, in a case where another object to be heated is heated, the upper heating chamber 4a can be continuously used such that the object is put in the upper heating chamber 4a and the upper door 30a is closed and a heating start operation is performed on an operation display panel 3.

According to the microwave heating apparatus in the third embodiment, in a case where the upper door 30a is opened, even when the lower door 30b is closed, the heating process in the lower heating chamber is stopped once to enhance safety.

As a matter of course, according to the microwave heating apparatus in the third embodiment, when the object to be heated in the lower heating chamber 4b is taken out, that object can be taken out by opening the lower door 30b only. Both of the upper door 30a and the lower door 30b can be separately opened and closed, and the objects of heating in the heating chambers can be separately heated by setting desired heating conditions for the upper heating chamber 4a and/or the lower heating chamber 4b on the operation display panel 3.

In addition, although the microwave heating apparatus according to the third embodiment has the upper door 30a and the lower door 30b corresponding to the two heating chambers 4a and 4b, respectively, a small door 30a may be provided in one door 2 and an object to be heated can be put in and taken out of one heating chamber in order to further enhance the safety. Fig. 18 is a front view showing an example in which the small upper door 30a is provided on the upper side of the door 2 in the microwave heating apparatus according to the third embodiment. As shown in Fig. 18, according to this microwave heating apparatus, while the whole of the heating chamber 4 can be opened by the door 2, the object to be heated in the upper heating chamber 4a can be taken out by opening the upper door 30a only. As a matter of course, a lower door 30b may be provided in the door 2.

Since the microwave heating apparatus in the third embodiment can correspond to a case where the heating chamber 4 is not separated and used as one heating chamber as it is, a case where the upper heating chamber 4a and the lower heating chamber 4b are used at the same time, and a case where either the upper heating chamber 4a or the lower heating chamber 4b is used, it can flexibly correspond to various usage purposes of the user, so that the heating apparatus is highly convenient.

In addition, although the heating chamber is divided into the upper and lower heating chambers by the one partition plate 28 in the microwave heating apparatus according to the third embodiment, the present invention is not limited to this, and includes a constitution in which a plurality of heating chambers may be provided by the plurality of partition plates 28 and feeding parts are provided in each of the heating chambers.

As the partition plate 28 having the above constitution is used in the microwave heating apparatus according to the third embodiment, the heating chamber 4 can be divided into the plurality of parts and a spark is prevented from being generated between the partition plate 28 and the wall surface of the heating chamber.

As described above, according to the microwave heating apparatus in the third embodiment, similar to the microwave heating apparatus in the first embodiment, convenience is improved due to the plurality of the heating chambers, and the objects of heating having different configurations, kinds, and volumes can be heated into a desired state by arranging the feeding parts 21a, 21b, 21c and 21d serving as the plurality of microwave suppliers for radiating the microwaves, to optimize the microwaves radiated from the microwave suppliers. Furthermore, according to the microwave heating apparatus in the third embodiment, the heating chamber can be chosen according to the object to be heated, so that the heating apparatus can be highly convenient.

(Fourth Embodiment)

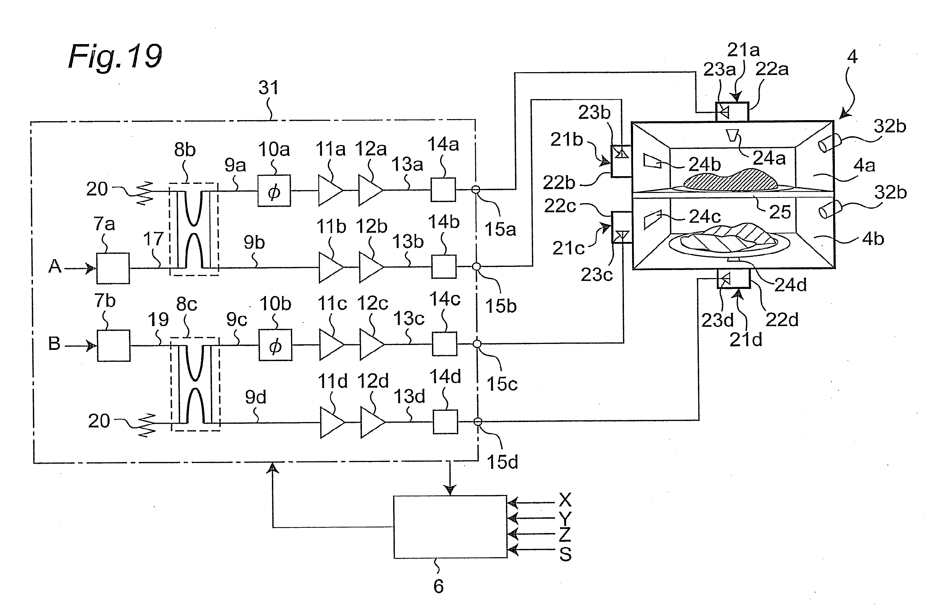

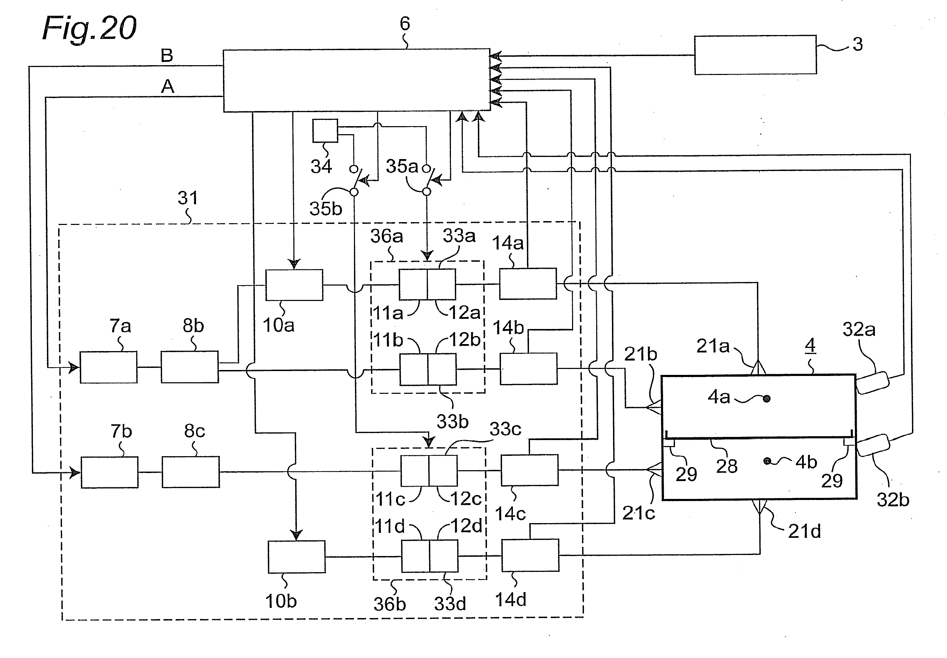

A microwave heating apparatus according to a fourth embodiment of the present invention will be described with reference to accompanying Figs. 19 and 20. Fig. 19 is a block diagram showing a constitution mainly based on a microwave supply system of the microwave heating apparatus according to the fourth embodiment. Fig. 20 is a block diagram showing a constitution mainly based on a control system of the microwave heating apparatus according to the fourth embodiment.

The microwave heating apparatus according to the fourth embodiment differs from the microwave heating apparatus according to the second embodiment shown in Fig 13 in that two oscillation parts are provided in a microwave generation part. The same reference symbol is assigned to the one having the same function and constitution as that of the second embodiment and the description in the first embodiment and the second embodiment is applied to it in the following description of the fourth embodiment shown in Figs. 19 and 20. A different point between the microwave heating apparatus in the second embodiment and the microwave heating apparatus in the fourth embodiment will be described hereinafter.

As shown in Fig. 19, although the basic constitution of the microwave heating apparatus according to the fourth embodiment is similar to the microwave heating apparatus according to the second embodiment shown in Fig. 13, the number of the oscillation parts is different.

A microwave generation part 31 in the microwave heating apparatus according to the fourth embodiment includes a first oscillation part 7a as an oscillator for a feeding part 21a and a feeding part 21b radiating microwaves to an upper heating chamber 4a and a second oscillation part 7b as an oscillator for a feeding part 21c and a feeding part 21d radiating microwaves to a lower heating chamber 4b.

Power detection parts 14a, 14b, 14c and 14d connected to microwave transmission paths 13a, 13b, 13c and 13d between main amplifiers 12a, 12b, 12c and 12d in amplification blocks and output parts 15a, 15b, 15c and 15d in the microwave generation part 31 extract reflected powers from a heating chamber 4. Information of the extracted reflected power is input to a control part (CPU) 6 and a frequency of a case where the reflected power shows a smallest value or a minimum value is detected by the control part 6. The control part 6 sends frequency adjustment signals A and B to the oscillation parts 7a and 7b so that an oscillation is started at the detected frequency. As a result, the microwave generation part 31 outputs a microwave signal in which the reflected power shows the smallest value or the minimum value, and the microwave heating apparatus effectively performs a heating process under the heating condition that the reflected power is minimized.

As described above, each of the power detection parts 14a, 14b, 14c and 14d extracts the power of a reflected wave (reflected power) transmitted from the heating chamber to the microwave generation part, and when it is assumed that a power coupling degree is about 40 dB, a power amount of about 1/10000 of the reflected power is extracted. Each signal showing the extracted power is rectified by a detector diode (not shown) and smoothed by a capacitor (not shown). The smoothed signal is input to the control part 6.

Therefore, the microwave heating apparatus controlled by the control part 6 as describe above, is operated under the condition that the reflected wave is smallest, that is, under that the condition that the object to be heated receives highest microwave energy, based on the heating chamber and the object to be heated put in the heating chamber. Therefore, the microwave heating apparatus according to the fourth embodiment can heat the object efficiently with a low reflection loss.

Fig. 20 is the block diagram showing the constitution mainly based on the control system in the microwave heating apparatus according to the fourth embodiment. Characteristic control in the microwave heating apparatus according to the fourth embodiment will be described with reference to the block diagram shown in Fig. 20.

The first oscillation part 7a and the second oscillation part 7b in the microwave generation part 31 oscillate at the optimal frequency in response to the frequency adjustment signals A and B from the control part 6 and output desired microwave signals for the upper heating chamber 4a containing one object to be heated and the lower heating chamber 4b containing the other object to be heated. The control part 6 selects frequencies as the microwaves suitable for both objects of heating and outputs the frequency adjustment signals A and B. An extraction operation process in the control part 6 is algorithm for selecting a frequency of a region having a less reflected wave (the smallest value or the minimum value) basically.

The power of the reflected wave from the upper heating chamber 4a is detected by the power detection parts 14a and 14b through the feeding parts 21a and 21b. The signal showing the power of the reflected wave detected by the power detection parts 14a and 14b is returned to the control part 6. The control part 6 performs an arithmetic operation based on the returned signal, and determines an oscillation frequency of the first oscillation part 7a by selecting the frequency of a case where the reflected wave is small so as to be suitable for the upper heating chamber 4a.

Meanwhile, the same is applied to a case where the lower heating chamber 4b is heated, such that a power of a reflected wave from the lower heating chamber 4b is detected by the power detection parts 14c and 14d through the feeding parts 21c and 21d. A signal showing the power of the reflected wave detected by the power detection parts 14c and 14d is returned to the control part 6. The control part 6 performs an arithmetic operation based on the returned signal, and determines an oscillation frequency of the second oscillation part 7b by selecting the frequency of a case where the reflected wave is small so as to be suitable for the lower heating chamber 19b.

When the oscillation frequency is desirably adjusted, in a case where the frequency extracting operation is initially performed at the maximum output, there is a possibility that the main amplifiers 12a, 12b, 12c and 12d are broken because the reflected wave is too large. Therefore, the first frequency extracting operation is preferably performed at a low output. Once the frequency of a case where the reflected wave is small is extracted, algorithm in which the output is increased at the frequency to a high output used in the normal operation is preferable. The elevation of the microwave output can be implemented when the control part 6 outputs a command to elevate the oscillation signals of the first oscillation part 7a and the second oscillation part 7b.

According to the microwave heating apparatus in the fourth embodiment, by the control part 6 operating as described above, the upper heating chamber 4a and the lower heating chamber 4b can be heated in independent heating sequences. Therefore, when the upper heating chamber 4a and the lower heating chamber 4b heat different objects of heating in different heating conditions, the control part 6 needs to perform the processes in the different heating sequences for the heating chambers 4a and 4b.

A method for using the microwave heating apparatus according to the fourth embodiment includes a method in which a user sets heating times on an operation display panel 3 and puts the objects of heating in the two heating chambers 4a and 4b and performs processes of the heating sequences manually. One manual application includes a method in which different objects of heating are put in the two heating chambers 4a and 4b and heated for desired heating times set by the user separately. In addition, another manual application includes a method in which an object to be heated is put in one heating chamber only and heated for a heating time set by the user. Furthermore, still another manual application includes a method in which a partition board 25 or a partition plate 28 is removed from the heating chamber 4 and a large object is put in the undivided heating chamber 4 and heated for a heating time set by the user.

For example, although automatic cooking in the microwave oven is highly convenient for some users, it is indispensable to provide manual usage for a user with much knowledge about the device. Because, when the user wants to cook uniquely, uniform cooking by automatic cooking is not satisfactory.

Therefore, since the microwave heating apparatus according to the fourth embodiment can be applied to various kinds of manual applications, it is user-friendly and highly convenient.

The microwave heating apparatus according to the fourth embodiment is provided with an infrared ray sensor 32a for monitoring a heated state by detecting the temperature rise of the object to be heated put in the upper heating chamber 4a. The microwave heating apparatus according to the fourth embodiment continuously monitors a difference between a finishing target (temperature) determined by the heating condition set on the operation display panel 3 by the user and the actual finishing state (temperature). When the control part 6 detects that the difference becomes zero during the heating operation, the control part 6 stops the drive of the first oscillation part 7a to stop the heating operation. In addition, power supply to an upper heating chamber amplification block 36a consisting of a first amplification block 33a composed of a first-stage amplifier 11a and a main amplifier 12a, and a second amplification block composed of a first-stage amplifier 11b and a main amplifier 12b is stopped by cutting off a connector 35a. The connector 35a is provided between a driving power supply part 34 and the upper heating chamber amplification block 36a, and turns on/off the power supply from the driving power supply part 34 to the upper heating chamber amplification block 36a. When the connector 35a is cut, the microwave output from the microwave generation part 31 is completely stopped.

The microwave heating apparatus according to the fourth embodiment is also provided with an infrared ray sensor 32b for monitoring the heated state by detecting the temperature rise of the object to be heated put in the lower heating chamber 4b, similar to the upper heating chamber 4a. The microwave heating apparatus according to the fourth embodiment continuously monitors a difference between a finishing target (temperature) determined by the heating condition set on the operation display panel 3 by the user and the actual finishing state (temperature). When the control part 6 detects that the difference becomes zero during the heating operation, the control part 6 stops the drive of the second oscillation part 7b to stop the heating operation. In addition, power supply to a lower heating chamber amplification block 36b consisting of a third amplification block 33c composed of a first-stage amplifier 11c and a main amplifier 12c, and a fourth amplification block 33d composed of a first-stage amplifier 11d and a main amplifier 12d is stopped by cutting off a connector 35b. The connector 35b is provided between the driving power supply part 34 and the lower heating chamber amplification block 36b, and turns on/off the power supply from the driving power supply part 34 to the lower heating chamber amplification block 36b. When the connector 35b is cut, the microwave output from the microwave generation part 31 is completely stopped.

In addition, when the user opens the door of the microwave heating apparatus, since the connectors 35a and 35b are cut off in response to the opening operation, and the microwave output from the microwave generation part 31 is completely stopped, the user can be completely prevented from being exposed to the microwave.

As described above, since the microwave heating apparatus according to the fourth embodiment is provided with the two oscillation parts 7a and 7b, the outputs of the oscillation parts 7a and 7b are divided into the four microwave outputs by the two power distributors 8b and 8c. In addition, according to the microwave heating apparatus in the fourth embodiment, similar to the microwave heating apparatus in the second embodiment, since two phase variable parts 10a and 10b are provided, the microwaves radiated into the heating chambers 4a and 4b can have a desired phase differences by the phase variable parts 10a and 10b to which the voltage signal as the control signal from the control part 6 is input.

In addition, according to the microwave heating apparatus in the fourth embodiment, the heating operations of the upper heating chamber 4a and the lower heating chamber 4b are performed in independent sequences. However, in a case where either one of the heating operations is completed and either the upper door 30a or the lower door 30b is opened, even when the microwave is shielded between the two heating chambers 4a and 4b by the partition unit of the partition board 25 or the partition plate 28, there is a possibility that the microwave leaks between the upper heating chamber 4a and the lower heating chamber 4b. Thus, even when the other heating chamber is in operation, the microwave output is completely stopped to secure safety.

Although the heating chamber is divided into the upper and lower parts in the microwave heating apparatus in the fourth embodiment, the apparatus may have a constitution in which arrangement of the feeding parts is changed, and a partition unit to divide the heating chamber into right and left parts is provided, and the microwave is concentrated on an object to be heated put in each divided heating chamber.

As described above, the microwave heating apparatuses according to the first to fourth embodiments of the present invention have the plurality of feeding parts, and the feeding parts are arranged on the different wall surfaces constituting the heating chamber, and the plurality of heating chambers can be provided by the partition board (partition plate) for shielding the electric wave. According to the microwave heating apparatus in the present invention, since the object to be heated can be heated in each heating chamber in the independent sequence, the present invention can be applied to a heating apparatus using dielectric heat such as an microwave oven, a disposer, or a microwave power supply as a plasma power supply of a semiconductor production device.

(Fifth Embodiment)

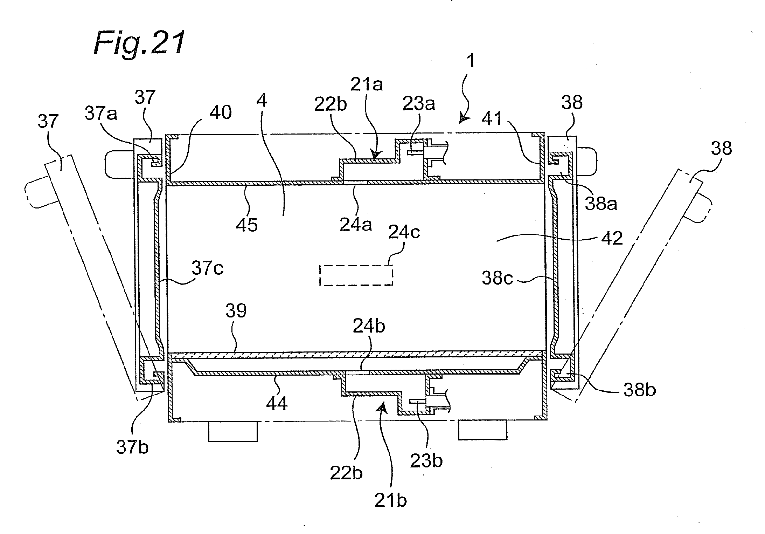

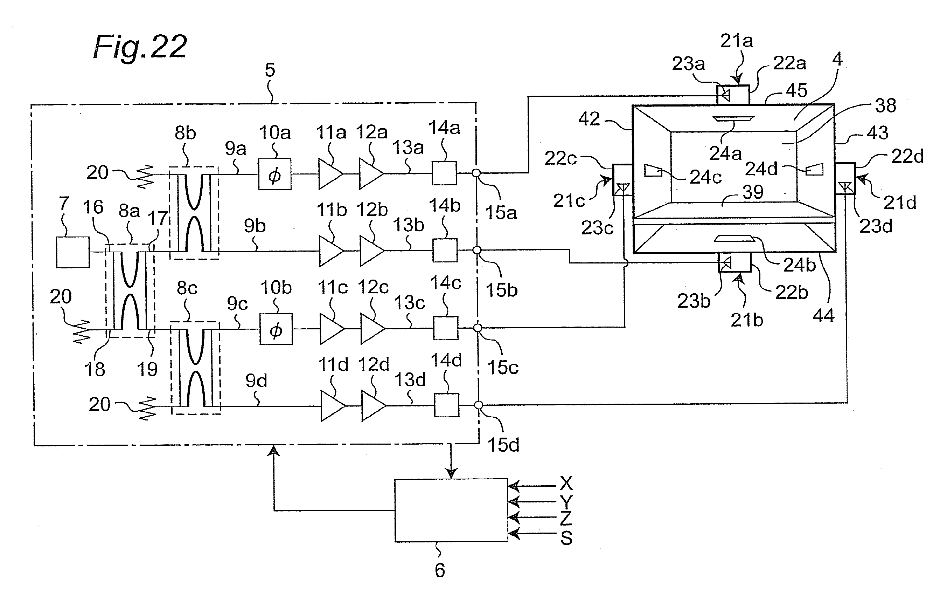

A microwave heating apparatus according to a fifth embodiment of the present invention will be described with reference to accompanying Figs. 21 and 22 hereinafter. Fig. 21 is a sectional view showing a constitution of the microwave heating apparatus according to the fifth embodiment. Fig. 22 is a block diagram showing a constitution of a microwave supply system of the microwave heating apparatus according to the fifth embodiment. In the following description of the fifth embodiment, the same reference symbol is assigned to the one having the same function and constitution as those of the microwave heating apparatus according to the above first to fourth embodiments and description thereof will not be repeated in the fifth embodiment to avoid duplication.

According to the microwave heating apparatus in the fifth embodiment of the present invention, similar to the above first to fourth embodiments, a feeding part is provided on each of different wall surfaces of a heating chamber, and an electromagnetic distribution in the heating chamber is uniformed or varied based on an object to be heated.

Especially, the microwave heating apparatus according to the fifth embodiment solves the following problem.

A heating chamber of a microwave oven as a conventional microwave heating apparatus has a rectangular solid configuration in general. A door through which the object to be heated is put in and taken out of the heating chamber is provided on one wall surface constituting the heating chamber. Recently, a face-to-face kitchen becomes popular among households. According to such face-to-face kitchen, the door of the microwave oven faces the kitchen side so as to be opened or closed in the kitchen in general. In addition, food products to be reheated are sold at convenience stores. The microwave oven is used for reheating the food at the convenience stores so that the food can be eaten immediately by a customer. The microwave oven used for the above purpose is set such that its door faces the inner side of the cash register to be operated by a staff of the convenience store.

Under the above circumstances of the microwave oven, when the microwave oven set on the face-to-face kitchen can be used from both kitchen side and living-room side, its convenience is boosted. In addition, when the microwave oven at the convenience stores can be used from both cash register inner side and cash register outer side facing the customer, its convenience is also boosted.

To meet the above setting circumstances, a constitution provided with a dorm-shaped door in which a ceiling part is opened and closed is proposed. For example, Japanese Unexamined Utility Model Publication No. 63-139408 discloses a microwave oven having a dorm-shaped door.

However, according to the microwave oven having the dorm-shaped door, since the ceiling part of the microwave oven is opened and closed, a space is needed at an upper part of the microwave oven to some extent. When the microwave oven having the dorm-shaped door is used at home, it is difficult to set the microwave oven on a rack and operate it. In addition, when the above microwave oven is used at the convenience store, although the plurality of microwave ovens are needed, the above microwave oven cannot be stacked.

According to the microwave oven as the microwave heating apparatus in the fifth embodiment, the doors are provided in the front and back sides of the heating chamber to solve the above problem.

The microwave heating apparatus according to the fifth embodiment of the present invention will be described in detail hereinafter.

Fig. 21 is a side sectional view showing a microwave oven 1 as the microwave heating apparatus, in which the left side is its front side and the right side is its back side. Fig. 22 is a view showing a constitution of a microwave supply system of the microwave oven 1, and showing a front view of a heating chamber 4 on its right side in which a left wall surface 42, a right wall surface 43, a bottom wall surface 44, an upper wall surface 45 and a back side door 38 are shown.

As shown in Figs. 21 and 22, the microwave oven 1 according to the fifth embodiment has the heating chamber 4 having a roughly rectangular solid structure to contain an object to be heated. The heating chamber 4 is formed of a metal material such as iron, aluminum and stainless to cut off the microwave and includes the left wall surface 42, the right wall surface 43, and the upper wall surface 45, and a front side door 37 and a back side door 38 opened and closed for the object to be heated put in and taken out of the heating chamber 4. The heating chamber 4 has a shielding structure so as to confine the supplied microwave in its inside. In addition, open states of the front side door 37 and the back side door 38 are shown by a dashed line in the microwave oven 1 shown in Fig. 21.

As shown in Fig. 21, electric wave leakage prevention mechanisms 37a and 37b are provided at a peripheral part of the front side door 37 opposed to a front side door mounting plate 40 provided on the side of the apparatus body, and electric wave leakage prevention mechanisms 38a and 38b are provided at a peripheral part of the back side door 38 opposed to a back side door mounting plate 41. A hole punching is processed so as to cut off the microwave and see the inside of the heating chamber 4 at center parts 38c and 37c of the doors 37 and 38, respectively.

As shown in Fig. 22, a microwave generation part 5 forming the microwave and supplying it to the heating chamber 4 comprised an oscillation part 7 constituted by using a semiconductor element, three two-stage power distribution parts 8a, 8b and 8c to distribute an output of the oscillation part 7 to four outputs, first-stage amplifiers 11a, 11b, 11c and 11d constituted by using a semiconductor element, to which the four outputs distributed from the second-stage power distribution parts 8b and 8c are input through microwave transmission paths 9a, 9b, 9c and 9d, main amplifiers 12a, 12b, 12c and 12d constituted by using a semiconductor, to which the outputs of the first-stage amplifiers 11a, 11b, 11c and 11d are input to be more amplified, output parts 15a, 15b, 15c and 15d to which the outputs of the main amplifiers 12a, 12b, 12c and 12d are input through microwave transmission paths 13a, 13b, 13c and 13d, power detection parts 14a, 14b, 14c and 14d connected to the microwave transmission paths 13a, 13b, 13c and 13d, for detecting reflected powers from the heating chamber 4, and phase variable parts 10a and 10b connected to the microwave transmission paths 9a and 9c, respectively, similar to the first embodiment shown in Fig. 2.

Feeding parts 21a, 21b, 21c and 21d are provided in the heating chamber 4 to radiate the microwaves transmitted from the four output parts 15a, 15b, 15c and 15d of the microwave generation part 5 to the inside of the heating chamber 4. The feeding parts 21a, 21b, 21c and 21d are arranged on wall surfaces constituting the heating chamber 4, respectively. The feeding parts 21c and 21d are arranged nearly at the center parts of the opposed left wall surface 42 and the right wall surface 43 in the heating chamber 4, respectively so as to be opposed to each other. Similarly, the feeding parts 21a and 21b are arranged nearly at the center parts of the opposed bottom wall surface 44 and the upper wall surface 45, respectively so as to be opposed to each other.

As described above, the feeding parts 21a, 21b, 21c and 21d are arranged on the different wall surfaces constituting the heating chamber 4, in the microwave heating apparatus according to the fifth embodiment.

In the microwave heating apparatus according to the fifth embodiment, the feeding parts 21a, 21b, 21c and 21d have supply parts 23a, 23b, 23c and 23d serving as antennas for radiating the microwaves, waveguide parts 22a, 22b, 22c and 22d for guiding the microwaves from the supply parts 23a, 23b, 23c and 23d, and openings 24a, 24b, 24c and 24d formed respectively in the wall surfaces of the heating chamber 4.

In the feeding parts 21a, 21b, 21c and 21d, the waveguide parts 22a, 22b, 22c and 22d cover the openings 24a, 24b, 24c and 24d formed in the wall surfaces of the heating chamber 4 from the outside of the heating chamber wall surfaces, in which the supply parts 23a, 23b, 23c and 23d are arranged at its start end and the openings 23a, 23b, 23c and 23d are arranged at its termination end, respectively. The supply parts 23a, 23b, 23c and 23d are constituted such that center conductors of coaxial transmission paths through which the outputs are supplied from the microwave generation part 5 protrude into the waveguide parts 22a, 22b, 22c and 22d, respectively. Each of the openings 24a, 24b, 24c and 24d has a roughly rectangular configuration. The opposed openings 24a and 24b of the upper wall surface 45 and the bottom wall surface 44, respectively are arranged such that their longitudinal directions are parallel to each other. In addition, the opposed opening 24c and the opening 24d of the left wall surface 42 and the right wall surface 43, respectively are arranged such that their longitudinal directions parallel to each other. According to the fifth embodiment, the longitudinal direction of the opening 24a and the opening 24b intersects with the longitudinal direction of the opening 24c and the opening 24d. That is, the longitudinal direction of the opening 24a and the opening 24b is a width direction of the heating chamber 4, and the longitudinal direction of the opening 24c and the opening 24d is a depth direction of the heating chamber 4.

As described above, the opening 24a and the opening 24c provided in the intersecting adjacent upper wall surface 45 and the left wall surface 42 among the wall surfaces constituting the heating chamber 4 are arranged such that their longitudinal directions are orthogonal. Similarly, the opening 24a and the opening 24d provided in the intersecting adjacent upper wall surface 45 and the right wall surface 43 are arranged such that their longitudinal directions are orthogonal.

In addition, according to the feeding part 21c arranged on the left wall surface 42 and the feeding part 21d arranged on the right wall surface 43, the openings 24c and 24d are positioned higher than the supply parts 23c and 23d serving as the antennas in the microwave heating apparatus according to the fifth embodiment.

As a component of each of the feeding parts 21a, 21b, 21c and 21d, an impedance matching element may be provided in each of the waveguide parts 22a, 22b, 22c and 22d to improve the transmission efficiency of the microwave radiated into the heating chamber 4.

According to the microwave heating apparatus in the fifth embodiment, the amplification blocks of the first-stage amplifiers 11a, 11b, 11c and 11d, and the main amplifiers 12a, 12b, 12c and 12d are composed of circuits of conductor patterns formed on one surface of dielectric substrates formed of a low-dielectric loss material. In addition, in order to operate the semiconductor element serving as the amplification element of each amplifier, a matching circuit is provided on each of the input and output sides of each semiconductor element.

A transmission circuit having characteristic impedance of roughly 50 Ω is formed in the microwave transmission paths 9a, 9b, 9c, 9d, 13a, 13b, 13c and 13d in the microwave generation part 5 by conductor patterns provided on one surface of the dielectric substrates.

Each of the two-stage power distribution parts 8a, 8b and 8c has the same structure such as a 3 dB branch-line coupler configuration. The constitution of the first-stage power distribution part 8a will be described as a representative example hereinafter.

When reference symbols 16 to 19 are assigned to four terminals of the power distribution part 8a, microstrip lines each having a characteristic impedance of 50 Ω and an electric length of λ/4 (λ is an effective wavelength of a center frequency of a used frequency band) are arranged between the first terminal 16 and the second terminal 17, and between the third terminal 18 and the fourth terminal 19, respectively. In addition, microstrip lines each having a characteristic impedance of 35.35 Ω and an electric length of λ/4 are arranged between the first terminal 16 and the third terminal 18, and between the second terminal 17 and the fourth terminal 19, respectively. Furthermore, the third terminal 18 is connected to an electric terminator 20 having a resistance value of 50 Ω. The power distribution parts 8b and 8c are constituted similar to the power distribution part 8a.

According to the power distribution part 8a having the above constitution, the microwave signal input to the first terminal 16 is distributed to the second terminal 17 and the fourth terminal 19 to be output. In addition, at this time, according to the relation of the phases between the microwave signals output from the second terminal 17 and the fourth terminal 19, the phase of the microwave signal output from the fourth terminal 19 is delayed by 90 degrees from the phase of the microwave signal output from the second terminal 17.

According to the microwave heating apparatus in the fifth embodiment, since the power distribution parts 8a, 8b and 8c are two-stage constitution, a roughly 1/4 of the output power of the oscillation part 7 is output to the following first-stage amplifiers 11a, 11b, 11c and 11d. The phases of the microwave signals transmitting in the microwave transmission paths 9a and 9c are delayed by 90 degrees and the phase of the microwave signal transmitting in the microwave transmission path 9d is delayed by 180 degrees based on the microwave signal transmitting in the microwave transmission path 9b.

In addition, according to the microwave heating apparatus in the fifth embodiment, the phase variable parts 10a and 10b are connected to the two microwave transmission paths 9a and 9c. Each of the phase variable parts 10a and 10b is formed of a capacitance variable element whose capacitance varies depending on an applied voltage, and its phase variable range is about 0 degrees to about 270 degrees.

The power detection parts 14a, 14b, 14c and 14d in the microwave generation part 5 extract the power of a reflected wave (reflected power) transmitted from the heating chamber 4 to the microwave generation part 5. When it is assumed that a power coupling degree is about 40 dB, each of the power detection parts 14a, 14b, 14c and 14d extracts a power amount of about 1/10000 of the reflected power. Each signal showing the extracted power is rectified by a detector diode (not shown) and smoothed by a capacitor (not shown) in each of the power detection parts 14a, 14b, 14c and 14d. The output signals of the power detection parts 14a, 14b, 14c and 14d are input to the control part 6.

The control part 6 controls a driving power supplied to each of the oscillation part 7, the first-stage amplifiers 11a, 11b, 11c and 11d, and the main amplifiers 12a, 12b, 12c and 12d serving as the components of the microwave generation part 5, based on a heating condition (shown by an arrow X in Fig. 22) directly input by a user on an operation display panel 3, heating information (shown by an arrow Y in Fig. 22) obtained by detecting an actual heated state of the object to be heated, and detection information (shown by an arrow Z in Fig. 22) regarding the reflected powers from the power detection parts 14a, 14b, 14c and 14d. In addition, the control part 6 controls voltages applied to the phase variable parts 10a and 10b, based on the heating condition (X), the heating information (Y) and the detection information (Z). Thus, as the control part 6 controls the microwave generation part 5, the object to be heated in the heating chamber 4 can be optimally heated and finished as desired by the user.

The microwave generation part 5 is provided with a radiator such as a fin-shaped radiator part and a fan, to cool down the semiconductor elements constituting the oscillation part 7, the first-stage amplifiers 11a, 11b, 11c and 11d, and the main amplifiers 12a, 12b, 12c and 12d.

The microwave heating apparatus according to the fifth embodiment is provided with a plate 39 for covering the opening 24b of the feeding part 21b provided on the bottom surface 44 of the heating chamber 4 and the object to be heated is put on the plate 39. This plate 39 is formed of a low-dielectric loss material.

An operation of the microwave heating apparatus according to the fifth embodiment will be described hereinafter.

First, the user opens the front side door or the back side door 38, puts the object to be heated in the heating chamber 4, and closes the above front side door 37 or the back side door 38. Then, the user inputs the heating condition for the object to be heated. In addition, the operation display panel is provided on each of the front side and the back side in the microwave heating apparatus.

Then, the user presses a heating start key after being input the heating condition. When the heating start key is pressed, a heating start signal (S) is input to the control part 6. When the control part 6 receives the hating start signal (S), it outputs a control signal to the microwave generation part 5 and starts the microwave generation part 5. In addition, the control part 6 supplies powers to the oscillation part 7, the first-stage amplifiers 11a, 11b, 11c and 11d and the main amplifiers 12a, 12b, 12c and 12d from a driving power supply. At this time, a voltage signal having an initial oscillation frequency of 450 MHz is supplied to the oscillation part 7, for example and the oscillation is started.

The output of the oscillation part 7 is divided by nearly half in the first-stage power distribution part 8a and further divided by nearly half in the second-stage power distribution parts 8b and 8c, so that four microwave power signals are formed. The microwave power signals are sequentially supplied to the first-stage amplifiers 11a, 11b, 11c and 11d and the main amplifiers 12a, 12b, 12c and 12d formed of the semiconductor elements. The microwave power signals are amplified by the first-stage amplifiers 11a, 11b, 11c and 11d and the main amplifiers 12a, 12b, 12c and 12d to which the driving power supply is input.

The microwave power signals pass through the respective transmission paths and amplified in the first-stage amplifiers 11a, 11b, 11c and 11d and the main amplifiers 12a, 12b, 12c and 12d and output from the output parts 15a, 15b, 15c and 15d through the power detection parts 14a, 14b, 14c and 14d.

The microwave power signals output from the microwave generation part 5 are transmitted to the feeding parts 21a, 21b, 21c and 21d provided in the heating chamber 4, and radiated into the heating chamber 4. At this time, when the phase of the signal of the microwave radiated from the feeding part 21b on the bottom wall surface 44 of the heating chamber 4 is used as the base, the signals of the microwave radiated from the feeding part 21a of the upper wall surface 45 and the feeding part 21c of the left wall surface 42 is delayed by about 90 degrees and the signal of the microwave radiated from the feeding part 21d of the right wall surface 43 is delayed by about 180 degrees. That is, the outputs of the microwave generation part 5 are input to the feeding parts 21a, 21b, 21c and 21d such that the phase differences between the opposed feeding parts (21a and 21b) and between the opposed the feeding parts (21c and 21d) become about 90 degrees. At this time, each of the main amplifiers 12a, 12b, 12c and 12d outputs a microwave power less than 100W, 50W, for example to each of the feeding parts 21a, 21b, 21c and 21d.

When it is assumed that 100% of the microwave power supplied to the heating chamber 4 is absorbed by the object to be heated, although the reflected power is not generated from the heating chamber 4, the reflected power varying depending on the kind, configuration, size, amount of the object to be heated is generated in practice. Electric characteristics in the heating chamber 4 containing the object to be heated are determined by the kind, configuration, size and amount of the object to be heated, and the reflected power is generated based on an output impedance of the microwave generation part 5 and an impedance of the heating chamber 4, and the reflected power is transmitted from the heating chamber 4 to the microwave generation part 6.

Each of the power detection parts 14a, 14b, 14c and 14d detects the reflected power transmitted from the heating chamber 4 to the microwave generation part 5, and outputs a detection signal as the detection information (Z) proportional to the reflected power amount, to the control part 6. When the control part 6 receives the detection signal, it extracts a frequency of a case where the reflected power is a smallest value or a minimum value. In the frequency extracting operation, the control part 6 reduces the oscillation frequency of the oscillation part 7 from the initial 2450 MHz at a pitch of 0.1 MHz (1 MHz in 10 millisecond, for example). Thus, when it reaches 2400 MHz that is a lower limit of a frequency variable range, the control part 6 increases the frequency at a pitch of 1 MHz and when it reaches 2450 MHz, and the control part 6 increases it at a pitch of 0.1 MHz until 2500 MHz that is an upper limit of the frequency variable range. In this frequency extracting operation, the frequency of a case where the reflected power is the smallest value or the minimum value, and the signal corresponding to the reflected power at the frequency are stored. Thus, among from the group of the frequencies of cases where the reflected power is the smallest or minimum, the frequency of a case where the signal corresponding to the reflected power is smallest is selected. The control part 6 controls the oscillation part 7 at the selected frequency and controls the oscillated output of the oscillation part 7 to correspond to the heating condition (X) input by the user. As a result, each main amplifier outputs a microwave power from 200W to 300W.

In addition, as another constitution, a heating process may be performed at the detected smallest frequency of a first minimum value as the microwave frequency at the time of heating operation, and when the reflected power detected by the power detection part becomes greater than a predetermined value, the oscillation part 7 generates the frequency of a second minimum value greater than the first minimum value detected before the heating process as the microwave frequency at the time of heating operation.

The outputs from the microwave generation part 5 controlled described above are transmitted to the feeding parts 21a, 21b, 21c and 21d and radiated into the heating chamber 4. At this time, when the phase of the signal of the microwave radiated from the feeding part 21b on the bottom wall surface 44 of the heating chamber 4 is used as the base, the signals of the microwaves radiated from the feeding part 21a of the upper wall surface 45 and the feeding part 21c of the left wall surface 42 are delayed by about 90 degrees and the signal of the microwave eradiated from the feeding part 21d of the right wall surface 43 is delayed by about 180 degrees. That is, the outputs of the microwave generation part 5 are input to the feeding parts 21a, 21b, 21c and 21d such that the phase differences between the opposed feeding parts (21a and 21b) and between the opposed the feeding parts (21c and 21d) become about 90 degrees.

According to the microwave heating apparatus in the fifth embodiment, the phase difference is the multiples of nearly 90 degrees and a 90 degree hybrid distributor is used for the power distribution parts 8a, 8b and 8c. Thus, when the 90 degree hybrid distributor is used in the power distribution part, stable and equal distribution can be implemented in a compact configuration, and when the power distribution parts are connected in the plural stages, and the output is divided into four and eight, for example, the phase difference between the distributed outputs can be 90 degrees stably.

According to the microwave heating apparatus in the fifth embodiment, the one oscillation part 7 serves as an oscillation source, the four divided microwave signals are formed by the power distribution parts, and the phase variable parts 10a and 10b are provided in the microwave transmission paths 9a and 9c, respectively of the two pairs of the microwave transmission path (9a and 9b) and (9C and 9d) for transmitting the microwave signals to the opposed feeding parts (21a and 21b) and (21c and 21d). According to the fifth embodiment, the longitudinal directions of the opposed openings (24a and 24b) and (24c and 24d) of the opposed feeding parts (21a and 21b) and (21c and 21d) are the same directions.

In the microwave generation part 5 having the above constitution, as the voltages applied to the phase variable parts 10a and 10b are controlled, the phase difference between the microwaves radiated from the opposed and/or the adjacent feeding parts can be the same or opposite (difference of 180 degrees).

As described above, according to the microwave heating apparatus in the fifth embodiment, by varying the phase difference of the microwaves radiated into the heating chamber, the propagation state of the microwave in the heating chamber is temporally varied to avoid partial heating and implement uniform heating in the object to be heated.

In addition, although the phase variable parts 10a and 10b are connected to the two microwave transmission path 9a and 9c in the fifth embodiment, the phase variable parts may be connected up to the microwave transmission paths 9a, 9b, 9c and 9d. In this case, when each phase variable part is controlled individually and temporally, since the phase combination of the microwaves radiated from the feeding parts 21a, 21b, 21c and 21d can be varied, more uniform heating can be provided.

In addition, according to the microwave heating apparatus in the fifth embodiment, since the voltages to the phase variable parts 10a and 10b are controlled such that the reflected power amount is reduced, based on the detection signals of the power detection parts 14a, 14b, 14c and 14d, the heating efficiency can be improved and a heating time can be shortened.

According to the microwave heating apparatus in the fifth embodiment, when the reflected power amount detected by each of the power detection parts 14a, 14b, 14c and 14d exceeds the predetermined maximum allowable reflected power amount, the control part 6 reduces the supply power to the oscillation part 7, or the first-stage amplifiers 11a, 11b, 11c and 11d and the main amplifiers 12a, 12b, 12c and 12d to lower the oscillation output, to prevent each semiconductor element from being thermally destroyed.

Although the feeding parts 21a, 21b, 21c and 21d are provided on the four wall surfaces (left wall surface 42, the right wall surface 43, the bottom wall surface 44, and the upper wall surface 45) constituting the heating chamber 4, respectively in the microwave heating apparatus according to the fifth embodiment, when at least two feeding parts are provided on the adjacent two wall surfaces (the left wall surface 42 and the bottom wall surface 44, or the right wall surface 43 and the bottom wall surface 45) constituting the heating chamber 10, respectively, since the microwave can be radiated onto the object to be heated directly from the two different directions, so that the heating of a thick object can be accelerated, for example.

The feeding parts (21a and 21b, and 21c and 21d) provided on the wall surfaces (the upper wall surface 45 and the bottom wall surface 44, and the left wall surface 42 and the right wall surface 43) constituting the heating chamber 4 each have the rectangular configuration in which the longitudinal direction is the same. The microwave radiated from the opening is propagated in the direction perpendicular to the longitudinal direction of the opening from which the microwave is radiated around the four wall surfaces along the wall surfaces. Therefore, the polarized surfaces of the microwaves radiated from the opposed openings (24a and 24b, and 24c and 24d) are nearly parallel to each other, so that the energy of the microwaves can be concentrated on the object to be heated.

In addition, the microwave heating apparatus according to the fifth embodiment is constituted such that the longitudinal directions of the openings (24a and 24c, and 24d and 24b) of the feeding parts (21a and 21c, and 21d and 21b) provided on the adjacent wall surfaces (for example, the upper wall surface 45 and the left wall surface 42, and the right wall surface 43 and the bottom wall surface 44) constituting the heating chamber 4 are at right angles to each other. According to the feeding parts constituted such that the longitudinal directions of the openings are at right angles to each other, since the polarized surfaces of the microwaves radiated from the openings of the feeding parts are at right angles to each other, they are prevented from interfering with each other, so that the energy of the microwaves radiated from the feeding parts can be efficiently supplied to the object to be heated.

Furthermore, according to the microwave heating apparatus in the fifth embodiment, the openings 24c and 24d of the feeding parts 21c and 21d provided on the left wall surface 42 and the right wall surface 43 of the heating chamber are provided at positions higher than the position of the supply parts 23c and 23d in the waveguide parts 22c and 22d. Thus, as the openings 24c and 24d are provided at the positions higher than the supply parts 23c and 23d, the propagation direction of the microwaves radiated from the openings 24c and 24d can slant toward the upper wall surface side. As a result, turbulence of the deflected surfaces of the microwaves radiated from the openings 24c and 24d due to the configuration, size and amount of the object to be heated can be prevented and the microwave energy can be more efficiently supplied to the object to be heated.

In addition, according to the microwave heating apparatus in the fifth embodiment, the openings 24c and 24d of the feeding parts 21c and 21d provided on the left wall surface 42 and the right wall surface 43 of the heating chamber are formed nearly in the center of the side wall surfaces. Since the openings 24c and 24d are formed nearly in the center of the side wall surfaces, the turbulence of the deflected surfaces of the microwaves radiated from the openings 24c and 24d due to bulkiness of the object to be heated in the heating chamber can be prevented and the microwave energy can be more efficiently supplied to the object to be heated.

Furthermore, although the two phase variable parts 10a and 10b are arranged in the two microwave transmission paths 9a and 9c of the plurality of microwave transmission paths 9a, 9b, 9c and 9d for transmitting the outputs of the power distribution parts 8a, 8b and 8c to the amplification block in the microwave heating apparatus according to the fifth embodiment, the microwave heating apparatus according to the present invention includes a constitution in which the phase variable part is arranged in at least one microwave transmission path. Thus, according to the microwave heating apparatus in the present invention, the phase variable part is arranged in at least one microwave transmission path, and the phase variable part is controlled to as to temporally vary the phase of the microwave radiated from the corresponding feeding part, so that the phase difference from the microwave radiated from the other feeding part can be varied. Therefore, since the microwave heating apparatus according to the present invention can vary the microwave distribution in the heating chamber, the object to be heated in the heating chamber can be more uniformly heated.

(Sixth Embodiment)

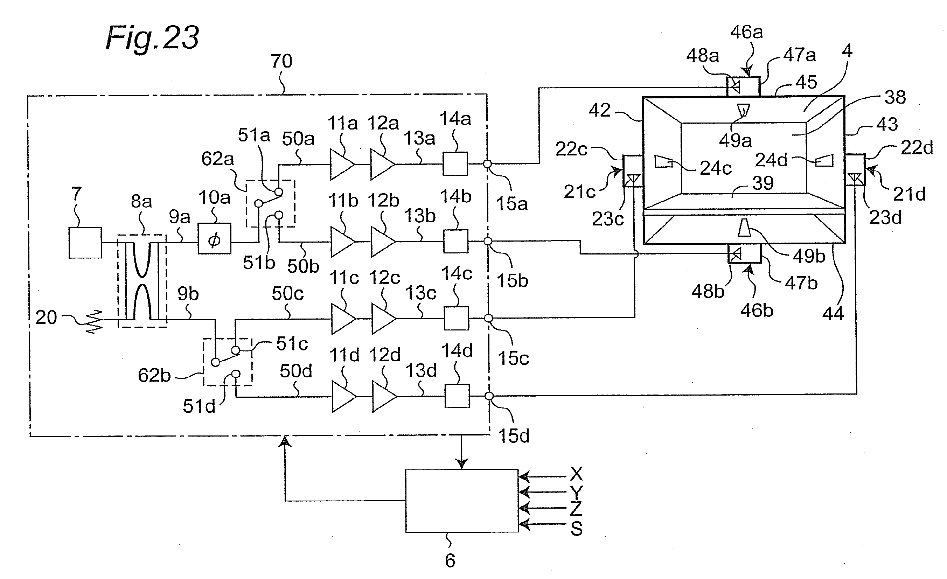

A microwave heating apparatus according to a sixth embodiment of the present invention will be described with reference to accompanying Fig. 23 hereinafter. Fig. 23 is a block diagram showing a constitution of a microwave supply system of the microwave heating apparatus according to the sixth embodiment. In the following description of the sixth embodiment, the same reference symbol is assigned to the one having the same function and constitution as those of the microwave heating apparatuses according to the above first to fifth embodiments and description thereof will not be repeated in the sixth embodiment.

According to the microwave heating apparatus in the sixth embodiment of the present invention, similar to the above first to fifth embodiments, a feeding part is provided on each of different wall surfaces of a heating chamber, an electromagnetic wave distribution in the heating chamber is uniformed or varied based on an object to be heated.

The microwave heating apparatus according to the sixth embodiment shown in Fig. 23 differs from the microwave heating apparatus according to the fifth embodiment in providing an amplification selecting part serving as an amplification selector in a microwave generation part, and in a configuration of an opening of a feeding part for radiating a microwave to a heating chamber.

As shown in Fig. 23, a microwave generation part 70 comprises an oscillation part 7 constituted by using a semiconductor element, a power distribution parts 8a to divide an output of the oscillation part 7 to two, amplification selecting parts 62a and 62b to which outputs of the power distribution part 8a are input through microwave transmission paths 9a and 9b, first-stage amplifiers 11a, 11b, 11c and 11d constituted by using semiconductor elements to which the outputs from the amplification selecting parts 62a and 62b are input through microwave transmission lines 50a 50b, 50c and 50d, main amplifiers 12a, 12b, 12c and 12d constituted by using semiconductor elements to amplify the outputs of the first-stage amplifiers 11a, 11b, 11c and 11d more, and output parts 15a, 15b, 15c and 15d to which the outputs of the main amplifiers 12a, 12b, 12c and 12d are input through microwave transmission paths 13a, 13b, 13c and 13d, to send their outputs to the feeding parts to be described later, respectively. In addition, power detection parts 14a, 14b, 14c and 14d are connected to the microwave transmission paths 13a, 13b, 13c and 13d, respectively to detect a reflected power from the heating chamber 4.

Furthermore, a phase variable part 10a is connected to the microwave transmission path 9a. The phase variable part 10a is formed of a capacitance variable element whose capacitance varies depending on an applied voltage, and its phase variable range is about 0 degrees to about 270 degrees.

The microwave heating apparatus according to the sixth embodiment has the heating chamber 4 having a roughly rectangular solid structure in which an object to be heated is put. The heating chamber 4 is formed of a metal material such as iron, aluminum and stainless to cut off the microwave and includes a left wall surface 42, a right wall surface 43, a bottom wall surface 44, and an upper wall surface 45, and oppositely arranged door 37 and door 38 (refer to Fig. 21). The doors 37 and 38 are a front side door and a back side door, respectively and can be opened and closed when the object to be heated is put in and taken out of the heating chamber 4. The heating chamber 4 has a shielding structure so as to confine the supplied microwave inside when the front side door 37 and the back side door 38 are closed.

Feeding parts 46a, 46b, 21c and 21d connected to the four output parts 15a, 15b, 15c and 15d of the microwave generation part 70 are arranged on the wall surfaces constituting the heating chamber 4. The feeding part 21c and the feeding part 21d are provided nearly in the center of the left wall surface 42 and the right wall surface 43 opposed in the heating chamber 4, and the feeding part 46a and the feeding part 46b are provided nearly in the center of the upper wall surface 45 and the bottom wall surface 44. The feeding parts 46a, 46b, 21c and 21d have openings 49a, 49b, 24c and 24d provided in the wall surface of the heating chamber 4, supply parts 48a, 48b, 23c and 23d for outputting the microwave signal from the microwave generation part 70, and waveguide parts 47a, 47b, 22c and 22d, respectively in which the supply parts 48a, 48b, 23c and 23d are arranged on the start end of the waveguide parts, and the openings 49a, 49b, 24c and 24d are arranged on the termination end of the waveguide parts. The waveguide parts 47a, 47b, 22c and 22d are constituted so as to cover the openings 49a, 49b, 24c and 24d from the outside, and guide the microwaves from the supply parts 48a, 48b, 23c and 23d to the openings 49a, 49b, 24c and 24d, respectively. The supply parts 48a, 48b, 23c and 23d are constituted such that center conductors of the coaxial transmission paths for supplying the outputs of the microwave generation part 70 protrude to the waveguide parts 47a, 47b, 22c and 22d, respectively. Each of the openings 49a, 49b, 24c and 24d has a roughly rectangular configuration, and their longitudinal directions are the same direction, and the depth direction in the apparatus in which the front side door 37 and the back side door 38 are provided.

In the microwave generation part 70, the first amplification selecting part 62a is provided at a subsequent stage of the phase variable part 10a connected to the microwave transmission path 9a in which the one output of the power distribution part 8a transmits. The first amplification selecting part 62a has switching terminals 51a and 51b as its two output terminals. The switching terminal 51a is connected to the first-stage amplifier 11a, and the switching terminal 51b is connected to the first-stage amplifier 11b. Therefore, the feeding part 46a provided on the upper wall surface 45 and the feeding part 46b provided on the bottom wall surface 44 are selected by the first amplification selecting part 62a.

In addition, the second amplification selecting part 62b is provided in the microwave transmission path 9b in which the other output of the power distribution part 8a transmits. The second amplification selecting part 62b has switching terminals 51c and 51d as its two output terminals. The switching terminal 51c is connected to the first-stage amplifier 11c, and the switching terminal 51d is connected to the first-stage amplifier 11d. Therefore, the feeding part 21c provided on the left wall surface 42 and the feeding part 21d provided on the right wall surface 43 are selected by the second amplification selecting part 62b.

The output power of the oscillation part 7 is divided by nearly half by the power distribution part 8a and input to the first amplification selecting part 62a and the second amplification selecting part 62b through the microwave transmission paths 9a and 9b, respectively. As described above, the first amplification selecting part 62a and the second amplification selecting part 62b select the amplification block to transmit the microwave signal from the amplification blocks including the first-stage amplifiers 11a, 11b, 11c and 11d and the main amplifiers 12a, 12b, 12c and 12d. The first amplification selecting part 62a and the second amplification selecting part 62b select the microwave transmission path 50a or 50b, or 50c or 50d, respectively. When the microwave signal transmits in the selected microwave transmission path and the driving power is supplied to the amplification block, the microwave signal is amplified there and the amplified signal of the microwave is radiated from the feeding part connected to the selected amplification block into the heating chamber.

When the signal of the microwave is radiated from the selected feeding part to the heating chamber, based on that phase of the microwave signal of the microwave transmission path 9a in which the one output of the power distribution part 8a transmits, the phase of the microwave signal of the microwave transmission path 9b in which the other output of the power distribution part 8a transmits is delayed by 90 degrees. Therefore, regarding the microwaves radiated into the heating chamber at the final stage, based on the phase of the microwave radiated from the feeding part 46a of the upper wall surface 45 or the feeding part 46b of the bottom wall surface 44, the phase of the microwave radiated from the feeding part 21c of the left wall surface 42 or the feeding part 21d of the right wall surface 43 is delayed nearly by 90 degrees. In this case, the phase variable range in the phase variable part 10a is 0 degrees.

As shown in Fig. 23, according to the microwave heating apparatus in the sixth embodiment, since the openings 49a, 49b, 24c and 24d of the feeding parts 46a, 46b, 21c and 21d provided in the heating chamber 4, respectively have the same longitudinal direction (depth direction), the microwave radiated from the opening propagates in the direction intersecting with the longitudinal direction of the opening and goes around along the heating chamber wall surfaces. As a result, the polarized surfaces of the microwaves radiated from the opposed openings are nearly parallel to each other, so that the energy of the microwaves can be concentrated on the object to be heated.

An operation of the microwave heating apparatus according to the sixth embodiment constituted as described above will be described hereinafter.

An operation regarding the selection of the oscillation frequency of a case where the heating of the object to be heated is started is the same as that of the fifth embodiment described above, description thereof will not be repeated.

When the user opens the front side door 37 or the black side door 38, puts the object to be heated in the heating chamber 4, inputs a heating condition (shown by an arrow X in Fig. 23) on an operation display panel 3, and presses a heating start key, the microwave heating apparatus starts the heating operation. When the control part 6 receives the heating condition (X) set by the user and a heating chamber start signal (S) formed when the heating start key is pressed, the control part 6 outputs a control signal to the microwave generation part 70. The control part 6 controls the first amplification selecting part 62a and the second amplification selecting part 62b based on the input heating condition and determines the amplification block to be operated when the heating is started. Then, the control part 6 supplies the driving power to the oscillation part 7 and makes it output the microwave having a desired frequency. Then, the first-stage amplifiers in the amplification blocks selected by the first amplification selecting part 62a and the second amplification selecting part 62b are operated and then the main amplifiers are operated.

The main amplifiers of the amplification blocks selected as described above output microwave powers of 200W to 500W having a phase difference of 90 degrees. Thus, the microwave is supplied and radiated from the feeding part connected to the selected amplification block into the heating chamber in which the object to be heated is housed. For example, when the feeding parts selected at the beginning of the heating to radiate the microwave are the feeding part 21d provided on the right wall surface 43 and the feeding part 46b provided on the bottom wall surface 44, the phase difference of the microwaves radiated from the feeding parts 21d and 46b is about 90 degrees. For example, when the signal of the microwave radiated from the feeding part 46b is used as the base, the signal of the microwave radiated from the feeding part 21d is delayed nearly by 90 degrees. At this time, the phase variable range of the phase variable part 10a is 0 degrees. Thus, when the microwaves whose phases are different by about 90 degrees are supplied from the feeding part 21d of the right wall surface 43 and the feeding part 46b of the bottom wall surface 44, a region of an electric field concentration of the microwave is formed nearly from the center toward the right wall surface in the heating chamber 4. In a case where the electric field concentration region is formed as described above in the heating chamber 4, when the object to be heated is put nearly at the center of the heating chamber 4, a part from nearly the center toward the right side of the object to be heated is strongly heated.

Therefore, to uniformly heat the heating of the object, the control part 6 outputs a control signal to switch to the amplification block to be driven, to the microwave generation part 70, based on the detection information (shown by Z in Fig. 23) regarding an appropriate time cycle or the object to be heated, temperature distribution information of the obj ect, for example. When the microwave generation part 70 receives the control signal, it stops the driving power supplied to the amplification block in operation, and switches the first amplification selecting part 62a and/or the second amplification selecting part 62b. When the switching operation is completed, the driving power is supplied to the switched amplification block to drive the amplification block.

The switching operation of the microwave heating apparatus according to the sixth embodiment will be described in detail hereinafter. Description will be made of a case where the feeding part 21d of the right wall surface 43 is switched to the feeding part 21c of the left wall surface 42, for example.

The switching operation from the feeding part 21d to the feeding part 21c is performed to promote the heating for a part from nearly the center to the left side of the object to be heated. For example, when surface temperature distribution information of the object to be heated is input to the control part 6 as the temperature distribution information of the object to be heated, a surface temperature at the part nearly from the center to the left side of the object to be heated is compared with a surface temperature at a part nearly from the center to the right side thereof. As a result, when the difference between the minimum surface temperature at the right region of the object and the maximum surface temperature at the right region thereof reaches 10°C or more, the control part 6 outputs a switching command signal.

When a driving power supply part (refer to reference symbol 34 in Fig. 20, for example) receives the switching command signal, it stops the driving power supplied to the first-stage amplifier 11d and the main amplifier 12d, based on the switching command signal. Thus, the second amplification selecting part 62b to which the switching command signal is input switches a common terminal from the switching terminal 51d to the switching terminal 51c. Then, the driving power supply part supplies the driving power to the first-stage amplifier 11c and the main amplifier 12c sequentially. After the series of switching operations, the microwave radiated from the feeding part 21c of the left wall surface 42 is supplied to the heating chamber.

When the microwaves radiated from the feeding part 21c of the left wall surface 42 and the feeding part 46b of the bottom wall surface 44 are supplied to the heating chamber 4 as described above, the part nearly from the center to the left side of the object comes to be heated strongly in the heating chamber.

When the part nearly from the center to the left side of the object to be heated does not reach the desired temperature yet during the heating operation as described above, the microwave feeding from the feeding part 46b of the bottom wall surface 44 may be switched to the microwave feeding from the feeding part 46a of the upper wall surface 45.

The switching operation from the feeding part 46b of the bottom wall surface 44 to the feeding part 46a of the upper wall surface 45 is substantially the same as the switching operation from the feeding part 21d of the right wall surface 43 to the feeding part 21c of the left wall surface 42 as described above although the amplification block and the amplification selecting part to be controlled are different.

The above series of switching operation is optionally performed during the heating operation, based on the surface temperature distribution information of the object to be heated.

The microwave heating apparatus according to the sixth embodiment is constituted such that the phase difference of the microwaves radiated from the two feeding parts in operation can be varied continuously between the same phase and opposite phase (difference of 180 degrees), by controlling the voltage applied to the phase variable part 10a connected to the microwave transmission path 9a. According to the microwave heating apparatus in the sixth embodiment, since the longitudinal direction of the opening of each feeding part is the same direction, when the phase variable part 10a is provided, the propagation state of the microwave propagating and going around the wall surface of the heating chamber can be temporally varied in sequence. As a result, according to the microwave heating apparatus in the sixth embodiment, partial heating of the object is prevented and uniform heating can be further promoted.

According to the microwave heating apparatus in the sixth embodiment, the heating operation is completed when a predetermined state is provided, based on the heating condition (X) set by the user, and the heating information (Y) such as the surface temperature of the object in the heating chamber.

According to the microwave heating apparatus in the sixth embodiment described above, the radiation position from which the microwave is supplied to the heating chamber can be selected by switching the amplification selecting parts 62a and 62b. Therefore, the microwave heating apparatus according to the sixth embodiment can promote the heating at the specific part of the object to be heated. In addition, according to the constitution of the microwave heating apparatus in the sixth embodiment, since the radiation position of the microwave can be temporally selected and switched, the whole of the object to be heated can be heated into the desired state.

In addition, according to the microwave heating apparatus in the sixth embodiment, the phase variable part 10a is provided in the microwave transmission path 9a between the output of the power distribution part 8a and the first amplification selecting part 62a. When the phase variable part is provided in the microwave transmission path, the phase of the microwave radiated from the feeding part can be temporally varied. When the phase difference of the microwaves supplied from the wall surfaces that are not opposed but adjacent to each other can be variably controlled, the microwave distribution in the heating chamber can be varied to promote the uniform heating for the object to be heated and promote the heating at the specific part of the object to be heated.

Furthermore, according to the microwave heating apparatus in the sixth embodiment, since the doors 37 and 38 are provided on the front side and the back side, respectively, the object to be heated can be put in and taken out of the heating chamber from the different directions, which is very convenient.

Although the microwave heating apparatus according to the sixth embodiment has the constitution in which the feeding part is provided on the wall surface constituting the heating chamber 4, it may have another constitution in which a plurality of feeding parts are provided on the same wall surface constituting the heating chamber 4 and either one of the feeding parts is selected by the amplification selecting part. In this constitution, a region close to the selected feeding part is strongly heated in the object to be heated. With the use of this, different objects having different heat receiving efficiency can be uniformly heated at the same time. When the same wall surface is the bottom wall surface, practical value is high.

(Seventh Embodiment)

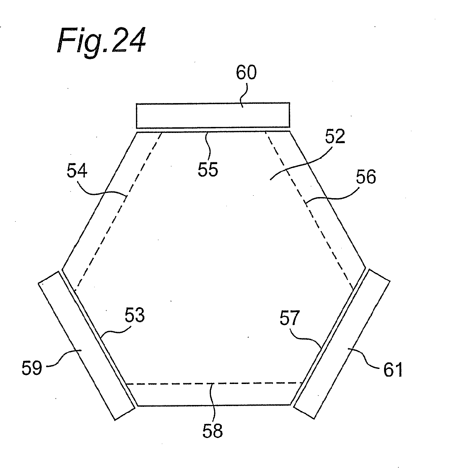

Fig. 24 is a plan view showing a microwave heating apparatus according to a seventh embodiment of the present invention.

As shown in Fig. 24, a heating chamber 52 has an octahedral configuration consisting of upper and lower wall surfaces and six side wall surfaces 53 to 58. Three doors 59 to 61 are arranged every other wall surfaces among the side wall surfaces 53 to 58. Feeding parts for supplying a microwave to the heating chamber 52 are provided on the upper and lower wall surfaces.

According to the microwave heating apparatus in the seventh embodiment, many doors used when the object to be heated is put in and taken out of the heating chamber 52 are provided. Therefore, according to the microwave heating apparatus in the seventh embodiment, the object to be heated can be accessed from various directions of the apparatus, which is more convenient.

As described above, the microwave heating apparatus according to the seventh embodiment of the present invention, the many doors are provided and the plurality of feeding parts serving as microwave suppliers for radiating the microwave are optimally arranged on the wall surface constituting the heating chamber. In addition, according to the microwave heating apparatus in the seventh embodiment, similar to the first to fifth embodiments, the radiation direction and radiation position of the feeding part can be optimized and the feeding part for radiating the microwave can be switched, and the phase difference of the microwaves between the feeding parts in operation can be varied. According to the microwave heating apparatus in the seventh embodiment constituted as described above, it can be applied to a heating apparatus using dielectric heat such as a microwave oven, a disposer, or a microwave power supply as a plasma power supply of a semiconductor production device.

(Eighth Embodiment)

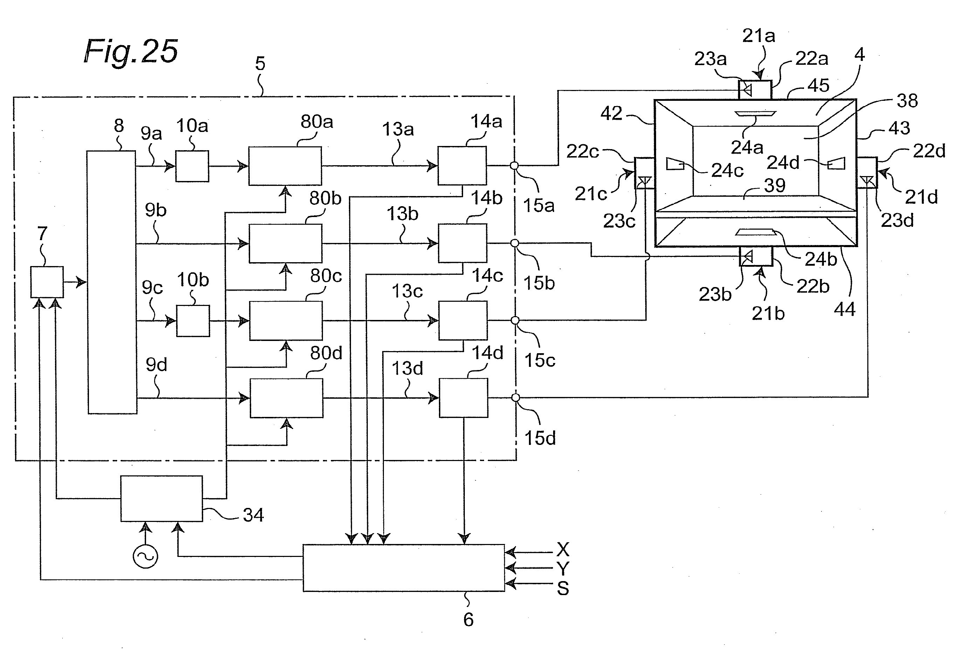

Fig. 25 is a block diagram showing a constitution of a microwave supply system in a microwave heating apparatus according to an eighth embodiment of the present invention. The microwave heating apparatus according to the eighth embodiment is substantially the same as the microwave heating apparatus according to the fifth embodiment shown in Fig. 22. With reference to the microwave heating apparatus according to the eighth embodiment, a specific example of an extracting process of a microwave frequency at the time of the heating operation based on a detected reflected power will be described. Therefore, in the description of the microwave heating apparatus according to the eighth embodiment, the same reference symbol is assigned to the one having the same function and constitution as that of the microwave heating apparatus according to the fifth embodiment and the description of the fifth embodiment is applied to it.

As shown in Fig. 25, a microwave oven serving as the microwave heating apparatus according to the eighth embodiment includes a heating chamber 4 provided with four feeding parts 21a, 21b, 21c and 21d, a microwave generation part 5, a control part 6 composed of a microcomputer, and a driving power supply part 34 connected to a commercial power supply for supplying a driving power to the microwave generation part 5.

The microwave generation part 5 includes an oscillation part 7, a power distribution part 8 (corresponding to 8a, 8b, and 8c in Fig. 22), phase variable parts 10a and 10b, amplification blocks 80a, 80b, 80c and 80d, and power detection parts 14a, 14b, 14c and 14d.

The driving power supply part 34 converts a AC voltage supplied from the commercial power supply to a variable voltage and a DC voltage, and supplies the variable voltage to the oscillation part 7 and supplies the DC voltage to the amplification blocks 80a, 80b, 80c and 80d.

The oscillation part 7 is constituted by using circuit elements, such as a transistor, and generates a microwave based on a voltage signal of the variable voltage supplied from the driving power supply part 34. In addition, the oscillation part 7 is connected to the control part 6, and its oscillation frequency and oscillation output is controlled by a voltage signal transmitted from the control part 6. Thus, the operation of the oscillation part 7 is controlled by the control part 6.

The amplification blocks 80a, 80b, 80c and 80d are operated by the DC voltage supplied from the driving power supply part 34 to amplify the microwave generated at the oscillation part 7.

Each of the amplification blocks 80a, 80b, 80c and 80d includes a radiator fin and a circuit substrate, and a first-stage amplifier and a main amplifier are formed on the circuit substrate. In addition, each of the amplification blocks 80a, 80b, 80c and 80d is composed of one or more amplifiers based on the output specification of the microwave heating apparatus. The amplifier is constituted by using a semiconductor element having high heat resistance and high pressure resistance such as a transistor using GaN (gallium nitride) and SiC (silicon carbide). A power supply voltage of the amplifier, a reference voltage designating a reference potential, and a control signal for controlling the operation/non-operation of the amplifier are supplied to each amplifier from the driving power supply part 34. The control signal has a voltage of 0V to -10V, for example and controls whether the amplifier performs the amplifying operation or stops it. In addition, in each of the amplification blocks 80a, 80b, 80c and 80d, the first-stage amplifier amplifies the microwave power from the oscillation part 7 and the main amplifier amplifies the output of the first-stage amplifier more.

The driving power supply part 34 is a switching power supply to supply desired voltages from the commercial power supply to the oscillation part 7 and the amplification blocks 80a, 80b, 80c and 80d, and also functions to insulate the potential of the commercial power supply from the potentials of the oscillation part 7 and the amplification blocks 80a, 80b, 80c and 80d.

The microwave powers output from the amplification blocks 80a, 80b, 80c and 80d are supplied to supply parts 23a, 23b, 23c and 23d serving as the antennas of the feeding parts 21a, 21b, 21c and 21d through the power detection parts 14a, 14b, 14c and 14d, respectively. The microwaves applied to the supply parts 23a, 23b, 23c and 23d are radiated into the heating chamber. The microwave radiated into the heating chamber is absorbed by an object to be heated and heat the object to be heated. A part of the microwave radiated into the heating chamber is reflected by the wall surface of the heating chamber and the surface of the object to be heated and returned to the supply parts 23a, 23b, 23c and 23d. Each of the power detection parts 14a, 14b, 14c and 14d transmits a detection signal to the control part 6, based on the value of the reflected power returned from the heating chamber 4.

The power detection parts 14a, 14b, 14c and 14d each include a detector diode, a directional coupler and a terminator, and supply the microwave amplified by the amplification blocks 80a, 80b, 80c and 80d to the feeding parts 21a, 21b, 21c and 21d provided in the heating chamber 4, respectively through coaxial cables, and output the detection signals based on the value of the reflected power from the heating chamber 4.

Control methods for the microwave generation part 5 and the driving power supply part 34 by the control part 6 will be described hereinafter.

The control part 6 performs the following process when the user sets a heating condition (X) and a heating start signal (S) is input. That is, the control part 6 sets a predetermined first output power as an output of the microwave generation part 5. The first output power is set so as to be smaller than a second output power for heating the object to be heated. When the microwave is radiated into the heating chamber, the generated reflected power varies depending on its frequency. Therefore, when the frequency is varied, the reflected power is largely increased or decreased. When the circuit elements constituting the oscillation part 7 and the amplification blocks 80a, 80b, 80c and 80d generate heat due to the generated reflected power, the heat is released based on the capability of the radiation mechanism provided therein. However, when the generated reflected power exceeds the radiation capability, the temperature of the circuit element is increased and the circuit element could be damaged. Thus, according to the microwave heating apparatus in the eighth embodiment, the first output power is set so as not to exceed the radiation capability. A method for determining the first output power will be described below.

Then, the control part 6 including the microcomputer sweeps the frequency of the microwave generated by the oscillation part 7 to an entire frequency band of 2400 MHz to 2500 MHz used in the microwave oven. At this time, the control part 6 stores the relation between the reflected power detected by the power detection parts 14a, 14b, 14c and 14d and the frequency. The frequency band is called an ISM (Industrial Scientific and medical) band.

In addition, the control part 6 may only store the relation between the reflected power and the frequency of a case where the reflected power shows a smallest value or a minimum value, instead of storing the relation between the reflected power and the frequency in the entire frequency band when the frequency of the microwave is swept. In this case, a used region in the control part 6 can be reduced.

Then, the control part 6 performs a frequency extracting operation to extract a specific frequency from the ISM band. In this frequency extracting operation, for example, the specific reflected power (having the smallest value or the minimum value, for example) is detected from the stored reflected powers, and the frequency of a case where the reflected power is obtained is extracted as the microwave frequency at the time of heating operation of the microwave heating apparatus. In addition, in a case where the microcomputer only stores a plurality of sets of relations between the reflected powers and the frequencies of cases where the reflected powers show the minimum values, it extracts the specific frequency (the frequency showing the smallest reflected power, for example) from the plurality of stored frequencies as the microwave frequency at the time of heating operation of the microwave heating apparatus.

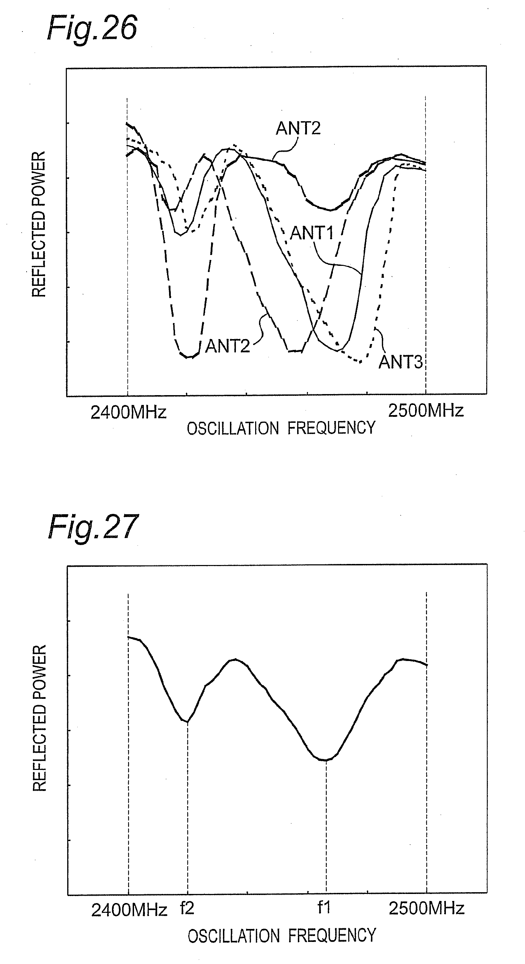

The frequency extracting operation will be described in detail hereinafter. Fig. 26 is a graph showing the relations between the reflected powers detected by the four power detection parts 14a, 14b, 14c and 14d and the oscillation frequencies. The vertical axis designates the reflected power [W] and the horizontal axis designates the oscillation frequency [Hz]. Referring to Fig. 26, ANT1 shows the relation between the reflected power from the feeding part 21a and the oscillation frequency, ANT2 shows the relation between the reflected power from the feeding part 21b and the oscillation frequency, ANT3 shows the relation between the reflected power from the feeding part 21c and the oscillation frequency, and ANT4 shows the relation between the reflected power from the feeding part 21d and the oscillation frequency. As shown in Fig. 26, the relations between the reflected powers detected by the power detection parts 14a, 14b, 14c and 14d and the oscillation frequencies show similar reflected power curve and have a plurality of minimum values.

The control part 6 receives data showing the relations between the reflected powers and the oscillation frequencies from the power detection parts 14a, 14b, 14c and 14d. The control part 6 calculates a synthesized reflected power curve from the above reflected power curves provided based on the data from the power detection parts 14a, 14b, 14c and 14d. Fig. 27 shows the synthesized reflected power curve. In Fig. 27, the horizontal axis designates the reflected power [W] and the horizontal axis designates the oscillation frequency [Hz]. The reflected power curve shown in Fig. 27 has two minimum values (frequencies f1 and f2).

The control part 6 extracts the frequency f1 when the reflected power is the minimum value, as the microwave frequency at the time of heating operation of the microwave heating apparatus. In a case where the plurality of frequencies are extracted, the frequency f2 when the reflected power is another minimum value is extracted as the microwave frequency at the time of second heating operation.

The sweeping operation for extracting the microwave frequency at the time of heating operation is performed in 1 msec per 0.1 MHz, for example. In this case, the sweeping operation requires about 1 sec over the entire frequency band of the ISM band.

After the sweeping operation, the control part 6 sets the predetermined second output power as an output power for driving the microwave heating apparatus. This second output power is for heating the object to be heated put in the heating chamber actually. The second output power corresponds to a maximum output power (rated output power) of the microwave heating apparatus. For example, when the rated output power of the microwave oven as the microwave heating apparatus is 950W, the second output power is previously set to 950W.

Thus, the control part 6 radiates the microwave of the microwave frequency at the time of heating operation that is extracted at the second output power from the feeding parts 21a, 21b, 21c and 21d to the heating chamber. As a result, the reflected power is reduced and the heating of the object can be efficiently performed. The heating operation at this time is a real heating operation for heating the object actually.

During this real heating operation, the control part 6 determines whether the reflected power detected by any one of the power detection parts 14a, 14b, 14c and 14d exceeds a predetermined threshold value or not. Here, the threshold value may be set to a value provided by adding 50W to the minimum value of the reflected power detected at the time of frequency extracting operation, for example. With the threshold value determined as described above, when the reflected power exceeds 50W from the value at the time of the start of the real heating operation, the control part 6 sweeps the frequency of the microwave over the entire frequency band of the ISM band again and performs the frequency extracting operation.

Since the frequency extracting operation is performed when the reflected power becomes high during the real heating operation as described above, the microwave heating apparatus according to the eighth embodiment can surely prevent the reflected power from being considerably increased during the real heating operation of the object to be heated.

In addition, even when the frequency characteristics of the reflected power is largely varied due to the heating for the object to be heated, since the frequency extracting operation is performed by the sweeping operation over the entire frequency band of the ISM band, the reflected power is always prevented from being increased.

Then, the control part 6 sets the microwave frequency previously extracted at the time of heating operation, as a reference frequency. Thus, the control part 6 performs a partial sweeping operation over a certain range of frequency band containing the set reference frequency, over a frequency band within a range of ±5 MHz from the reference frequency, for example and stores the relation between the reflected power and the frequency detected by the power detection parts 14a, 14b, 14c and 14d at that time. In addition, here, the control part 6 may only store the relation between the reflected power and the frequency of a case where the reflected power shows a minimum value, instead of continuously storing the relation between the reflected power and the frequency detected at the time of sweeping operation over the partial frequency band. In this case, a used region of the memory device in the control part can be reduced.

Then, the control part 6 performs a frequency re-extracting operation to re-extract a specific frequency of a case where the reflected power shows a minimum value. This frequency re-extracting operation is the same as the above frequency extracting operation.

As described above, according to the microwave heating apparatus in the eighth embodiment, before the real heating operation for the object to be heated is performed, the frequency of the microwave when the reflected power generated at the time of heating the object is at the minimum is extracted by the frequency extracting operation. When the extracted frequency is used as the microwave frequency for heating the object actually, the power conversion efficiency of the microwave heating apparatus is improved.

According to the microwave heating apparatus in the eighth embodiment, the first output power used in the frequency extracting operation is set to so as to be sufficiently lower than the output power at the time of real heating operation. Since the output power at the time of the frequency extracting operation is set as described above, even when the oscillation part 7 and the circuit elements constituting the amplification blocks 80a, 80b, 80c and 80d generate heat due to the reflected power at the time of sweeping operation of the frequency of the microwave, the heat can be sufficiently released by a radiation mechanism provided in each element. As a result, the circuit element is surely prevented from being damaged by the reflected power.

In addition, although the extraction of the microwave frequency at the time of heating operation is determined based on the smallest value or the minimum value of the reflected power in the microwave heating apparatus in the eighth embodiment, the microwave frequency at the time of heating operation may be extracted by the following method.

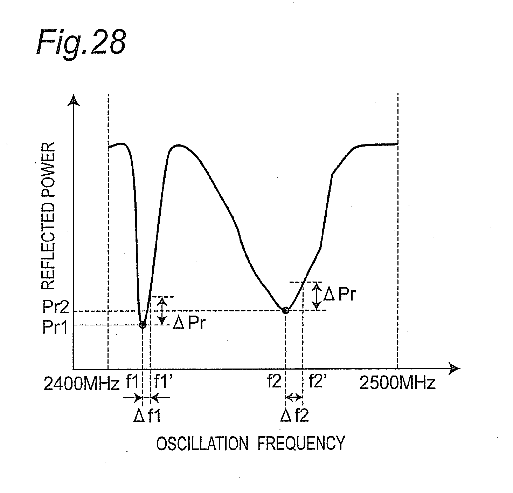

Fig. 28 shows one example of a synthesized reflected power curved calculated based on the data from the power detection parts 14a, 14b, 14c and 14d in the microwave heating apparatus according to the eighth embodiment, similar to Fig. 27. In Fig. 28, the vertical axis designates the reflected power [W] and the horizontal axis designates the oscillation frequency [Hz]. Another frequency extracting operation will be described with reference to Fig. 28 hereinafter.

The control part 6 stores a first frequency f1 when the reflected power reaches a minimum while the microwave frequency at the time of heating operation is extracted, and the reflected power value Pr1 at that time. Then, the control part 6 sweeps the frequency and stores frequency f1' when the reflected power Pr1 is increased by a predetermined span, 1 dB, for example. In addition, the control part 6 continues to sweep the frequency and stores a second frequency f2 when the reflected power reaches a minimum and the reflected power Pr2 at that time. Then, similar to the above, the control part 6 sweeps the frequency and stores frequency f2' when the reflected power Pr2 is increased by 1 dB, for example. When the oscillation part 7 reaches the maximum frequency of 2500 MHz, an arithmetic process regarding the two previously stored frequencies f1 and f2 are performed. Specifically, the difference in frequency before and after the predetermined span is calculated. This is expressed by the following formulas.

$$\Delta f1 = f1 - f1'$$

$$\Delta f2 = f2 - f2'$$

The differences in frequency Δf1 and Δf2 calculated as described above are compared. Here, the frequency having the larger difference in frequency is determined as the microwave frequency at the time of heating operation (that is, the frequency f2 in a case of the frequency curve shown in Fig. 28).

When the minimum value of the reflected power is stored, the condition that the minimum value is to be smaller than a previously set reflected power may be added.

When the microwave frequency at the time of heating operation is extracted as described above, the following effect can be provided in addition to the same effect as that of the frequency extracting operation shown in Fig. 27. That is, in a case of a very sharp-pointed frequency characteristic, it is thought that the minimum value is erroneously detected due to a disturbance noise. However, according to the frequency extracting operation shown in Fig. 28, the detection error due to the disturbance noise is avoided and the frequency of a case where the reflected power is at the minimum can be correctly extracted. As a result, the damage of the circuit element by the reflected power because the real heating operation is performed at a wrong frequency can be prevented.

The reflected power largely varies depending on the kind, configuration, temperature and size of the object to be heated. In addition, since a water amount of the object to be heated varies in the course of the heating operation because the object is heated by the microwave, the reflected power continuously varies. Therefore, according to the microwave heating apparatus in the eighth embodiment, when the reflected power exceeds the predetermined value, microwave frequency at the time of heating operation is re-extruded. At this time, the frequency having the large difference Δf generated within the predetermined span of the reflected power is selected as the microwave frequency at the time of heating operation as described above. Since the frequency is selected as described above, even when the frequency selected as the microwave frequency of a case where the reflected power is at the minimum is shifted as the heating operation progresses, the reflected power can be prevented from being increased, the number of re-extractions of the microwave frequency at the time of heating operation is reduced, and a time for heating the object can be substantially shortened.

In addition, although the microwave generation part 5 of the microwave heating apparatus according to the eighth embodiment has the constitution in which the microwave is supplied from the one oscillation part 7 to the four feeding parts 21a, 21b, 21c and 21d as shown in Fig. 25, the present invention is not limited to this and may be applied to a constitution in which each of the plurality of feeding parts has an oscillation part. In this case, the frequency extracting operation is performed as described above based on a reflected power detected by each power detection part, and the frequency of the microwave radiated from each feeding part at the time of heating operation can be extracted. Therefore, according to the microwave heating apparatus having such constitution, the microwave having the optimal frequency can be radiated from each feeding part provided on the heating chamber, the object in the heating chamber can be efficiently heated, and the power conversion efficiency can be considerably improved.

Although the microwave heating apparatus according to the eighth embodiment has the constitution in which each of the power detection parts 14a, 14b, 14c and 14d detects the reflected power from the heating chamber 4 and transmits the information to the control part 6, it may have a constitution in which the power detection parts 14a, 14b, 14c and 14d may detect not only the reflected power but also incident power transmitted from the amplification blocks 80a, 80b, 80c and 80d to the feeding parts 21a, 21b, 21c and 21d, respectively and transmit the detected signals to the control part 6. In this structure, when the control part 6 determines the microwave frequency at the time of heating operation, not only the reflected power but also the microwave frequency at the time of heating operation can be extracted using the ratio between the reflected power and the incident power. According to its extracting method, a part in which the reflected power is determined by the frequency extracting method described with reference to Figs. 27 and 28 may be changed such that it is determined by the ratio between the reflected power and the incident power. In this constitution, even when the oscillation part 7 and the amplification blocks 80a, 80b, 80c and 80d have frequency characteristics and the incident power is increased or reduced based on the frequency, the frequency of a case where the reflected power is at the smallest or minimum during the real heating operation can be detected without error. Therefore, according to the microwave heating apparatus having the above constitution, the heating operation can be always performed while the reflected power is at the minimum, the object to be heated can be efficiently heated, and power conversion efficiency is improved.

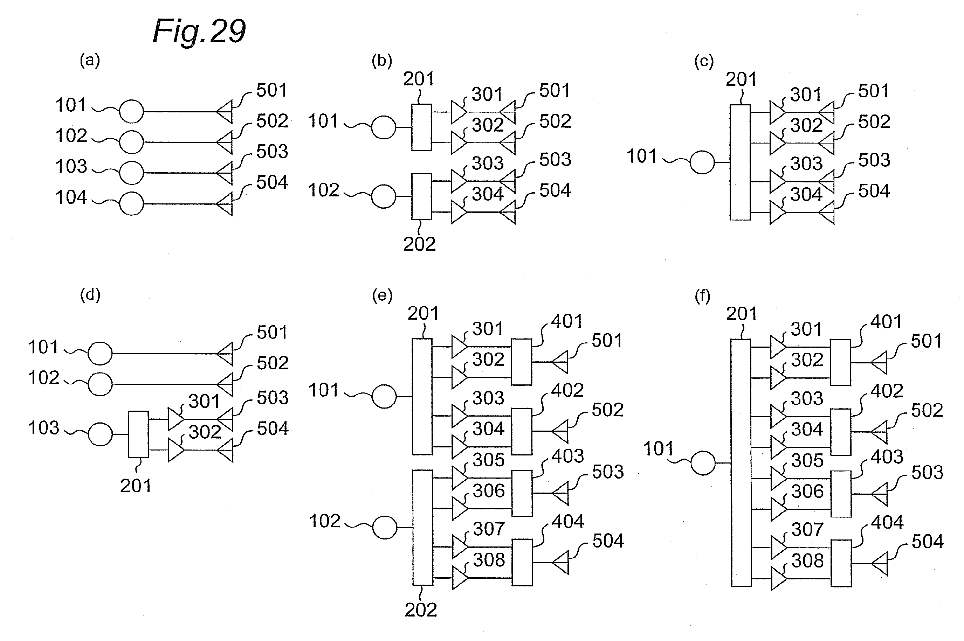

As described above, since the microwave heating apparatus according to the present invention has the constitution in which the plurality of feeding parts are provided on the heating chamber, and each feeding part is arranged at each of the predetermined positions constituting the heating chamber, the object to be heated in the heating chamber can be appropriately and efficiently heated. The constitution of the microwave generation part for supplying the microwave to the plurality of feeding parts will be described hereinafter. Fig. 29 are schematic views showing various kinds of constitutions of the microwave generation parts in the microwave heating apparatus according to the present invention. In addition, although the microwave generation part having four output parts 501 to 504 for supplying the microwave to the four feeding parts is shown in Fig. 29, the present invention is not limited to the four feeding parts, and they are provided based on the specification of the microwave heating apparatus, and the number of the output parts of the microwave generation part may be determined based on it.

A portion (a) of Fig. 29 is a view showing a microwave generation part having a plurality of oscillation parts 101 to 104, and output parts 501 to 504 for outputting microwave signals from the oscillation parts 101 to 104. According to this constitution, the oscillation parts 101 to 104 may be composed of magnetron or semiconductor elements. When magnetron is used, it is necessary to provide a rotating antenna in the heating chamber and/or a metal stirring mechanism in the heating chamber in order to promote uniform heating. In addition, when a waveguide two-distributor is used, the phase difference between the two feeding parts can be set to a specific value.

A portion (b) of Fig. 29 is a view showing a microwave generation part having two oscillation parts 101 and 102, two power distribution parts 201 and 202 for dividing the microwave from the oscillation parts 101 and 102 into two, amplification blocks 301 to 304 for amplifying the microwave signal from the power distribution parts 201 and 202, and output parts 501 to 504 for outputting the amplified microwave signals.

A portion (c) of Fig. 29 is a view showing a microwave generation part having a single oscillation part 101, power distribution part 201 for dividing the microwave signal from the oscillation part 101 into four, amplification blocks 301 to 304 for amplifying the microwave signal from the power distribution part 201, and output parts 501 to 504 for outputting the amplified microwave signals.

A portion (d) of Fig. 29 is a view showing a microwave generation part having a plurality of oscillation parts 101 to 103, output parts 501 and 502 for outputting the microwave signals from the oscillation parts 101 and 102, a power distribution part 201 for dividing the microwave from the oscillation part 103 to two, amplification blocks 301 and 302 for amplifying the microwave signal from the power distribution part 201, and output parts 503 and 504 for outputting the amplified microwave signals. In this constitution, the oscillation parts 101 and 102 may be composed of magnetron.

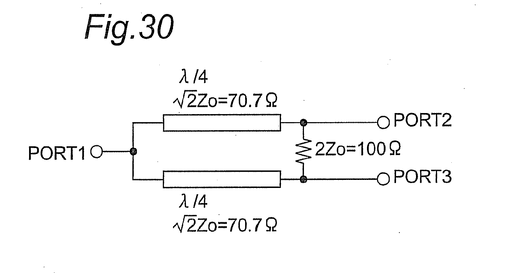

A portion (e) of Fig. 29 is a view showing a microwave generation part having a plurality of, two oscillation parts 101 and 102, for example, two power distribution parts 201 and 202 for dividing the microwave from the oscillation parts 101 and 102 into four, amplification blocks 301 to 308 for amplifying the microwave signals from the power distribution parts 201 and 202, four power synthesis parts 401 to 404 each synthesizing the amplified two microwave signals, and output parts 501 to 504 for outputting the synthesized microwave signals. In addition, the power distribution parts 201 and 202 and the power synthesis parts 401 and 404 have the same circuit constitution. However, a circuit element used in the power synthesis parts 401 to 404, a resistor, for example has large power capacity as compared with the elements of the power distribution parts 201 and 201. Fig. 30 is a view showing a specific circuit constitution of the power synthesis parts 401 to 404, in which the Wilkinson coupler is used. Referring to Fig. 30, a microwave signal is input to a PORT 2 and a PORT 3, and a synthesized microwave signal is output from the PORT 1. Synthetic performance is stabilized by a resistor connecting the input sides of the PORT 2 and PORT 3. In addition, in a case of the power distribution parts 201 and 202, the microwave signal is input to a PORT 1 shown in Fig. 30 and the divided microwave signals are output from the PORT 2 and the PORT 3.

A portion (f) of Fig. 29 is a view showing a microwave generation part having a single oscillation part 101, a power distribution part 201 for dividing the microwave from the oscillation part 101 to eight, amplification blocks 301 to 308 for amplifying the microwave signals from the power distribution part 201, four power synthesis parts 401 to 404 each synthesizing the two amplified microwave signals, and output parts 501 to 504 for outputting the synthesized microwave signals. In the constitution shown in the portion (f) of Fig. 29, the power synthesis parts 401 to 404 are the same as used in the constitution shown in the portion (e) of Fig. 29.

As described above, the microwave generation part for supplying the microwave to the plurality of feeding parts in the microwave heating apparatus according to the present invention includes the various kinds of constitutions. According to the microwave heating apparatus having the above constitutions, since the plurality of feeding parts are provided on the heating chamber, each feeding part is arranged at each of the plurality of predetermined positions constituting the heating chamber, and the microwave is supplied from the microwave generation part to each feeding part appropriately, the object to be heated in the heating chamber can be appropriately and efficiently heated.

INDUSTRIAL APPLICABILITY

Since the microwave heating apparatus according to the present invention can heat the object to be heated with high efficiency, it can be applied to various kinds of apparatuses such as a heating apparatus using dielectric heat such as a microwave oven, a disposer, or a microwave power supply as a plasma power supply of a semiconductor production device.

**Claims**

1. A microwave heating apparatus comprising:

  a microwave generation part having a plurality of output parts;
  a heating chamber to contain an object to be heated;
  a plurality of feeding parts supplying outputs of the plurality of output parts to the heating chamber; and

a control part controlling microwave radiation from the plurality of feeding parts to control an electromagnetic wave distribution in the heating chamber.

2. The microwave heating apparatus according to claim 1, wherein
the control part is constituted to select the feeding part radiating a microwave from among the plurality of feeding parts so as to concentrate the microwave on the object to be heated contained in the heating chamber.

3. The microwave heating apparatus according to claim 1, wherein
the control part is constituted to control a phase difference between the feeding parts radiating a microwave so as to concentrate the microwave on the object to be heated contained in the heating chamber.

4. The microwave heating apparatus according to claim 1, wherein
the microwave generation part has one or more oscillation parts generating a microwave.

5. The microwave heating apparatus according to any one of claims 1 to 4, wherein
the microwave generation part comprises an oscillation part generating the microwave, a power distribution part distributing the microwave output of the oscillation part to a plurality of microwave outputs, and a plurality of output parts outputting the microwave outputs of the power distribution part.

6. The microwave heating apparatus according to any one of claims 1 to 4, wherein
the heating chamber is provided with a partition unit dividing the heating chamber into a plurality of spaces, and the microwave is concentrated on an object to be heated contained in each divided heating chamber.

7. The microwave heating apparatus according to any one of claims 1 to 4, wherein
the microwave generation part comprises an oscillation part generating the microwave, a power distribution part distributing the microwave output of the oscillation part to a plurality of microwave outputs, amplifiers amplifying the microwave outputs of the power distribution part, and a plurality of output parts outputting the outputs of the amplifiers, and
the heating chamber is provided with a partition unit dividing the heating chamber into at least two spaces, and the microwave is concentrated on an object to be heated contained in each divided heating chamber by the plurality of feeding parts.

8. The microwave heating apparatus according to any one of claims 1 to 4, wherein
the heating chamber is provided with a partition unit dividing the heating chamber into at least two right and left or upper and lower spaces, and the microwave is concentrated on an object to be heated contained in each divided heating chamber by the plurality of feeding parts.

9. The microwave heating apparatus according to any one of claims 1 to 4, wherein
the microwave generation part comprises an oscillation part generating the microwave, a power distribution part distributing the microwave output of the oscillation part to a plurality of microwave outputs, a plurality of output parts outputting the microwave outputs of the power distribution part, and a power detection part detecting a reflected power from the feeding part,
the control part is constituted so as to radiate a microwave from the feeding part to an object to be heated at an output lower than a microwave output at the time of heating operation, varying a frequency generated from the oscillation part, to detect a frequency of a case where the reflected power detected by the power detection part shows a smallest value or a minimum value, and determine a microwave frequency at the time of heating operation based on the detected frequency before the object to be heated is heated, and
when the reflected power detected by the power detection part exceeds a predetermined threshold value during the heating operation while the microwave output at the time of heating operation is generated from the oscillation part at the determined microwave frequency, the control part is constituted to reduce the microwave power output from the oscillation part once, sweep the microwave frequency generated from the oscillation part, detects a frequency of a case where a reflected power detected by the power detection part again shows a smallest or minimum value, and resume the heating operation at the frequency of a case where the reflected power shows the smallest or minimum value.

10. The microwave heating apparatus according to claim 9, wherein
the control part is constituted to minimally increase or decrease the microwave frequency generated from the oscillation part during the heating operation, and slightly increase or decrease the microwave frequency generated from the oscillation part in a direction such that the reflected power detected by the power detection part is decreased.

11. The microwave heating apparatus according to claim 9, wherein
the control part is constituted to radiate the microwave from the feeding part to the object to be heated at the output lower than the microwave output at the time of heating operation, varying the frequency of the microwave from the oscillation part to detect a plurality of frequencies of cases where the reflected powers detected by the power detection part show minimum values, before the object to be heated is heated, and

the heating operation is performed at the frequency of a case where the detected reflected power shows a first minimum value, and when the reflected power detected by the power detection part exceeds a predetermined value, the oscillation part generates the frequency of a case where the detected reflected power shows a second minimum value detected before the heating operation.

12. The microwave heating apparatus according to any one of claims 1 to 4, wherein

the microwave generation part comprises a plurality of oscillation parts generating the microwave, a power distribution part distributing the microwave output of the oscillation part to a plurality of microwave outputs, and a plurality of output parts outputting the microwave outputs of the power distribution part,

the plurality of oscillation parts are paired with the feeding parts radiating the microwaves, and

the control part is constituted to control the oscillation parts separately such that the frequency of the microwave radiated from each of the feeding part becomes a frequency of a case where a reflected power from each of the feeding parts shows a smallest value or a minimum value.

13. The microwave heating apparatus according to any one of claims 1 to 4, wherein

the microwave generation part comprises an oscillation part generating the microwave, a power distribution part distributing the microwave output of the oscillation part to a plurality of microwave outputs, a plurality of output parts outputting the microwave outputs of the power distribution part, and a power detection part detecting a reflected power from the feeding part and an incident power transmitted from the oscillation part to the feeding part,

the control part is constituted to radiate a microwave from the feeding part to an object to be heated at an output lower than a microwave output at the time of heating operation, varying a frequency generated from the oscillation part, to detect a frequency of a case where a ratio between a reflected power detected by the power detection part and an incident power shows a smallest value or a minimum value, and determine a microwave frequency at the time of heating operation based on the detected frequency before the object to be heated is heated, and

when the determined microwave output at the time of heating operation is generated from the oscillation part, the control part is constituted to minimally increase or decrease the microwave frequency generated from the oscillation part during the heating operation, and slightly increase or decrease the microwave frequency generated from the oscillation part in a direction such that the ratio between reflected power detected by the power detection part and the incident power is decreased.

14. The microwave heating apparatus according to any one of claims 1 to 4, wherein

the heating chamber is provided with a partition unit having an electric wave shielding function to partition the heating chamber into a plurality of spaces, and the plurality of feeding parts are arranged at each of the plurality of spaces partitioned in the heating chamber, and optionally selected.

15. The microwave heating apparatus according to claim 14, wherein

the plurality of feeding parts are provided at each space of the heating chamber, and arranged on a plurality of different wall surfaces constituting each space of the heating chamber.

16. The microwave heating apparatus according to claim 14, wherein

the heating chamber has two spaces, the two feeding parts are arranged at the space so as to be opposed, and phases of the microwaves radiated from the two feeding parts are varied.

17. The microwave heating apparatus according to claim 14, wherein

the heating chamber has two spaces, the two feeding parts are arranged at the space such that the radiated microwaves intersect with each other, and phases of the microwaves radiated from the two feeding parts are varied.

18. The microwave heating apparatus according to claim 6, wherein

the partition unit divides the heating chamber to a plurality of upper and lower spaces and comprises a metal plate on which the object to be heated can be set.

19. The microwave heating apparatus according to claim 6, wherein

the oscillation part has a plurality of oscillation parts generating the microwaves, and each of the different oscillation parts is provided in each divided heating chamber.

20. The microwave heating apparatus according to claim 6, wherein

the oscillation part has a plurality of oscillation parts generating the microwaves, and each of the different oscillation parts is provided in each divided heating chamber, and an oscillation frequency of each oscillation part is varied independently.

21. The microwave heating apparatus according to claim 6, wherein
a heating time is optionally set for each of the plurality of spaces of the heating chamber.

22. The microwave heating apparatus according to claim 6, wherein
the heating chamber is provided with a temperature detection sensor remotely observing a heated state of the obj ect to be heated contained in each of the plurality of spaces in the heating chamber, and heating is stopped at a predetermined target temperature.

23. The microwave heating apparatus according to claim 22, wherein
an operation is performed in a sequence such that a heated state of the object to be heated is detected by the temperature detection sensor, and heating is stopped at the predetermined target temperature, and the operation is performed in the different sequence based on the object to be heated individually.

24. The microwave heating apparatus according to claim 6, wherein
the heating chamber is provided with a plurality of doors used when the object to be heated is put in each of the plurality of spaces of the heating chamber.

25. The microwave heating apparatus according to claim 24, wherein
when any one of the plurality of doors is open, microwave radiation to each space of the heating chamber is stopped.

26. The microwave heating apparatus according to claim 18, wherein
a peripheral part of the metal plate is formed of an insulating material to prevent a spark from being generated between a wall surface of the heating chamber and the metal plate.

27. The microwave heating apparatus according to any one of claims 1 to 4, wherein
a plurality of doors for containing the object to be heated are provided in wall surfaces constituting the heating chamber, and the feeding parts are provided on opposed wall surfaces having no door.

28. The microwave heating apparatus according to any one of claims 1 to 4, wherein
a plurality of doors for containing the object to be heated are provided in wall surfaces constituting the heating chamber so as to be opposed, and the feeding parts are provided on opposed wall surfaces having no door.

29. The microwave heating apparatus according to any one of claims 1 to 4, wherein
a plurality of doors for containing the object to be heated are provided in wall surfaces constituting the heating chamber so as to be opposed, the feeding parts are provided on opposed wall surfaces having no door, and the feeding parts receive the microwaves from a common oscillation part.

*Fig.1*

Fig.2

## Fig.3

## Fig.4

PHASE DIFFERENCE
= 0 DEGREE

TEMPERATURE
RISE VALUE

HIGH

LOW

## Fig.5

PHASE DIFFERENCE
= 40 DEGREE

TEMPERATURE
RISE VALUE

HIGH

LOW

## Fig.6

PHASE DIFFERENCE
= 80 DEGREE

TEMPERATURE
RISE VALUE

HIGH

LOW

*Fig.7*

PHASE DIFFERENCE
= 120 DEGREE

TEMPERATURE
RISE VALUE

HIGH

LOW

*Fig.8*

PHASE DIFFERENCE
= 160 DEGREE

TEMPERATURE
RISE VALUE

HIGH

LOW

*Fig.9*

PHASE DIFFERENCE
= 200 DEGREE

TEMPERATURE
RISE VALUE

HIGH

LOW

37

## Fig.10

PHASE DIFFERENCE
= 240 DEGREE

TEMPERATURE
RISE VALUE

HIGH

LOW

## Fig.11

PHASE DIFFERENCE
= 280 DEGREE

TEMPERATURE
RISE VALUE

HIGH

HR2

LOW

## Fig.12

PHASE DIFFERENCE
= 320 DEGREE

TEMPERATURE
RISE VALUE

HIGH

HR2

LOW

Fig.13

EP 2 182 774 A1

*Fig.14*

*Fig.15*

*Fig.16*

*Fig.17*

(a)

(b)

*Fig.18*

*Fig.19*

Fig.20

EP 2 182 774 A1

Fig.21

EP 2 182 774 A1

Fig.22

EP 2 182 774 A1

# Fig.23

EP 2 182 774 A1

*Fig.24*

Fig.25

EP 2 182 774 A1

## Fig.26

REFLECTED POWER

ANT2

ANT1

ANT2

ANT3

2400MHz

2500MHz

OSCILLATION FREQUENCY

## Fig.27

REFLECTED POWER

2400MHz  f2

f1

2500MHz

OSCILLATION FREQUENCY

## Fig.28

Fig.29

*Fig.30*

$\lambda/4$
$\sqrt{2}Zo=70.7\,\Omega$

PORT1

$\sqrt{2}Zo=70.7\,\Omega$
$\lambda/4$

$2Zo=100\,\Omega$

PORT2

PORT3

## INTERNATIONAL SEARCH REPORT

| International application No. |
| --- |
| PCT/JP2008/001852 |

| A. CLASSIFICATION OF SUBJECT MATTER |
| --- |
| *H05B6/70*(2006.01)i, *F24C7/02*(2006.01)i, *H05B6/68*(2006.01)i, *H05B6/72*(2006.01)i, *H05B6/74*(2006.01)i |
| According to International Patent Classification (IPC) or to both national classification and IPC |

| B. FIELDS SEARCHED |
| --- |
| Minimum documentation searched (classification system followed by classification symbols)<br>H05B6/70, F24C7/02, H05B6/68, H05B6/72, H05B6/74 |
| Documentation searched other than minimum documentation to the extent that such documents are included in the fields searched<br>Jitsuyo Shinan Koho     1922-1996   Jitsuyo Shinan Toroku Koho   1996-2008<br>Kokai Jitsuyo Shinan Koho  1971-2008   Toroku Jitsuyo Shinan Koho   1994-2008 |
| Electronic data base consulted during the international search (name of data base and, where practicable, search terms used) |

| C. DOCUMENTS CONSIDERED TO BE RELEVANT | | |
| --- | --- | --- |
| Category* | Citation of document, with indication, where appropriate, of the relevant passages | Relevant to claim No. |
| X | JP 2000-357583 A (Mitsubishi Electric Corp.), 26 December, 2000 (26.12.00), Par. Nos. [0015] to [0018]; Figs. 1 to 3 (Family: none) | 1 |
| E,X | JP 2007-317458 A (Matsushita Electric Industrial Co., Ltd.), 06 December, 2007 (06.12.07), Par. Nos. [0024] to [0039]; Figs. 1, 2 (Family: none) | 1 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>01 October, 2008 (01.10.08) | Date of mailing of the international search report<br>14 October, 2008 (14.10.08) |
| --- | --- |
| Name and mailing address of the ISA/<br>Japanese Patent Office | Authorized officer |
| Facsimile No. | Telephone No. |

Form PCT/ISA/210 (second sheet) (April 2007)

EP 2 182 774 A1

## INTERNATIONAL SEARCH REPORT

| International application No. |
|---|
| PCT/JP2008/001852 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

    The matter common to the inventions of claims 1/ 2/ 3/ 4/ 5/ 6, 18-26/
    7/ 8/ 9-11/ 12/ 13/ 14-17/ 27/ 28/ 29 is the matter stated in claim 1.  However,
    the search has revealed that the common matter is disclosed in JP 2000-357583
    A (Mitsubishi Electric Corp.), 26 December 2000 (26.12.00), paragraphs
    0015-0018, Figs. 1-3, and therefore, it is not novel and makes no contribution
    over the prior art.  (continued to extra sheet)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:  1

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

54

**INTERNATIONAL SEARCH REPORT**

| International application No. |
|---|
| PCT/JP2008/001852 |

Continuation of Box No.III of continuation of first sheet(2)

Since the inventions of claims 1/ 2/ 3/ 4/ 5/ 6, 18-26/ 7/ 8/ 9-11/ 12/ 13/ 14-17/ 27/ 28/ 29 have no common matter that can be considered as a special technical feature within the meaning of PCT Rule 13.2, second sentence, no technical relationship within the meaning of PCT Rule 13 between the different inventions can be seen, and the inventions do not satisfy the requirement of unity of invention.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004047322 A
- JP 52019342 A
- JP 53005445 A
- JP 56132793 A
- JP 63139408 A